(19) Europäisches Patentamt
European Patent Office
Office européen des brevets

(11) EP 1 624 511 A1

(12) **EUROPÄISCHE PATENTANMELDUNG**

(43) Veröffentlichungstag:
**08.02.2006 Patentblatt 2006/06**

(51) Int Cl.:
***H01M 8/02*** *(2006.01)* ***H01M 8/10*** *(2006.01)*

(21) Anmeldenummer: **04018600.9**

(22) Anmeldetag: **05.08.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(71) Anmelder: **Pemeas GmbH**
**65926 Frankfurt am Main (DE)**

(72) Erfinder: **Die Erfindernennung liegt noch nicht vor**

(74) Vertreter: **Luderschmidt, Schüler & Partner GbR**
**Patentanwälte,**
**Industriepark Höchst,**
**Geb. F821**
**65926 Frankfurt am Main (DE)**

(54) **Membran-Elektroden-Einheiten und Brennstoffzellen mit erhöhter Lebensdauer**

(57) Die vorliegende Erfindung betrifft eine Membran-Elektroden-Einheit umfassend

a) zwei elektrochemisch aktive Elektroden (1, 3), die durch eine Polymer-Elektrolyt-Membran (5) getrennt werden, wobei die Oberflächen der Polymer-Elektrolyt-Membran (5) derart mit den Elektroden (1, 3) in Kontakt stehen, dass die erste Elektrode (1) die Vorderseite der Polymer-Elektrolyt-Membran (5) und die zweite Elektrode (3) die Rückseite der Polymer-Elektrolyt-Membran (5) jeweils teilweise oder vollständig bedeckt,

b) Dichtungsmaterial (7, 9) auf der Vorder- und der Rückseite der Polymer-Elektrolyt-Membran (5),

wobei die Polymer-Elektrolyt-Membran (5) eine oder mehrere Aussparungen (11) aufweist und das Dichtungsmaterial (7) auf der Vorderseite der Polymer-Elektrolyt-Membran (5) mit dem Dichtungsmaterial (9) auf der Rückseite der Polymer-Elektrolyt-Membran (5) in Kontakt steht.

Weiterhin betrifft die Erfindung Verfahren zur Herstellung der Membran-Elektroden-Einheit sowie Brennstoffzellen, die eine derartige Membran-Elektroden-Einheit aufweisen.

Fig. 1

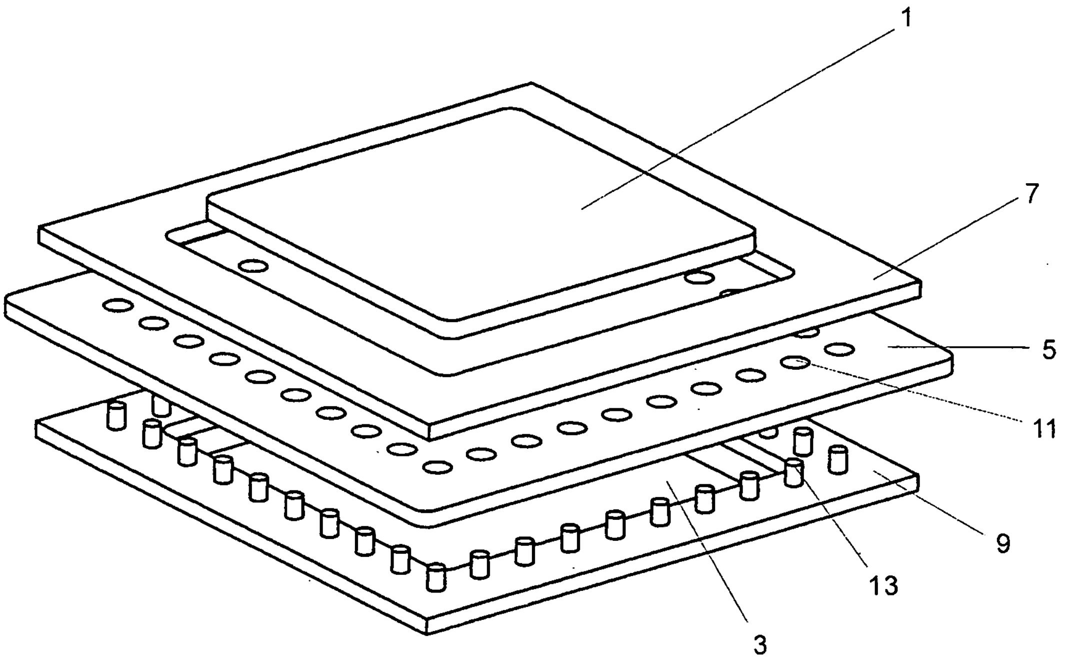


EP 1 624 511 A1

## Beschreibung

Die vorliegende Erfindung betrifft Membran-Elektroden-Einheiten und Brennstoffzellen mit erhöhter Lebensdauer, die zwei elektrochemisch aktive Elektroden aufweisen, die durch eine Polymer-Elektrolyt-Membran getrennt sind.

In Polymer-Elektrolyt-Membran(PEM)-Brennstoffzellen werden zur Zeit fast ausschließlich Sulfonsäure-modifizierte Polymere als protonenleitende Membranen eingesetzt. Dabei finden überwiegend perfluorierte Polymere Anwendung. Prominentes Beispiel hierfür ist Nafion™ von DuPont de Nemours, Willmington USA. Für die Protonenleitung ist ein relativ hoher Wassergehalt in der Membran erforderlich, der typischerweise bei 4 - 20 Molekülen Wasser pro Sulfonsäuregruppe liegt. Der notwendige Wassergehalt, aber auch die Stabilität des Polymers in Verbindung mit saurem Wasser und den Reaktionsgasen Wasserstoff und Sauerstoff, limitiert die Betriebstemperatur der PEM-Brennstoffzellenstacks üblicherweise auf 80 - 100 °C. Unter Druck kann die Betriebstemperaturen auf >120 °C erhöht werden. Ansonsten können höhere Betriebstemperaturen ohne einen Leistungsverlust der Brennstoffzelle nicht realisiert werden. Bei Temperaturen, die für ein gegebenes Druckniveau, oberhalb des Taupunktes von Wasser liegen, trocknet die Membran komplett aus und die Brennstoffzelle liefert keine elektrische Energie mehr, da der Widerstand der Membran auf so hohe Werte steigt, dass kein nennenswerter Stromfluss mehr erfolgt.

Eine Membran-Elektroden-Einheit mit integrierter Dichtung, die auf der zuvor dargelegten Technologie beruht, wird beispielsweise in US 5,464,700 beschrieben. Dabei sind im äußeren Bereich der Membran-Elektroden-Einheit, auf den nicht durch die Elektroden abgedeckten Flächen der Membran Filme aus Elastomeren vorgesehen, die zugleich die Dichtung zu den Bipolarplatten und zum Außenraum darstellen.

Durch diese Maßnahme kann eine Ersparnis an sehr kostspieligem Nafion®-Membranmaterial erzielt werden. Weitere Vorteile, die durch diesen Aufbau erzielt werden, beziehen sich auf die Kontamination der Membran. Eine Verbesserung der Langzeitstabilität wird in US 5,464,700 nicht dargestellt. Dies ergibt sich auch aus den sehr niedrigen Betriebstemperaturen. In der Beschreibung der in US 5,464,700 dargelegten Erfindung wird darauf hingewiesen, dass die Betriebstemperatur der Zelle auf Temperaturen kleiner gleich 80 °C beschränkt ist. Die hierin beschriebene Technik ist also für Brennstoffzellen mit Betriebstemperaturen über 100 °C nicht geeignet.

Aus systemtechnischen Gründen sind aber höhere Betriebstemperaturen als 100 °C in der Brennstoffzelle wünschenswert. Die Aktivität der in der Membran-Elektroden-Einheit (MEE) enthaltenen Katalysatoren auf Edelmetallbasis ist bei hohen Betriebstemperaturen wesentlich besser. Insbesondere sind bei der Verwendung von sogenannten Reformaten aus Kohlenwasserstoffen deutliche Mengen an Kohlenmonoxid im Reformergas enthalten, die üblicherweise durch eine aufwendige Gasaufbereitung bzw. Gasreinigung entfernt werden müssen. Bei hohen Betriebstemperaturen steigt die Toleranz der Katalysatoren gegenüber den CO-Verunreinigungen.

Des Weiteren entsteht Wärme beim Betrieb von Brennstoffzellen. Eine Kühlung dieser Systeme auf unter 80°C kann jedoch sehr aufwendig sein. Je nach Leistungsabgabe können die Kühlvorrichtungen wesentlich einfacher gestaltet werden. Das bedeutet, dass in Brennstoffzellensystemen, die bei Temperaturen über 100°C betrieben werden, die Abwärme deutlich besser nutzbar gemacht und somit die Brennstoffzellensystem-Effizienz durch Strom-Wärmekopplung gesteigert werden kann.

Um diese Temperaturen zu erreichen, werden im Allgemeinen Membranen mit neuen Leitfähigkeitsmechanismen verwendet. Ein Ansatz hierfür ist der Einsatz von Membranen, die ohne den Einsatz von Wasser eine elektrische Leitfähigkeit zeigen. Die erste erfolgversprechende Entwicklung in diese Richtung ist in der Schrift WO96/13872 dargelegt.

In dieser Schrift wird auch eine erste Methode zur Herstellung von Membran-Elektroden-Einheiten beschrieben. Dabei werden zwei Elektroden auf die Membran gepresst, die nur jeweils einen Teil der beiden Hauptflächen der Membran abdecken. Auf den verbleibenden freien Teil der Hauptflächen der Membran wird in der Zelle eine PTFE-Dichtung gedrückt, so dass die Gasräume von Anode und Kathode gegeneinander und gegen die Umgebung abgedichtet sind.

Eine weitere Hochtemperatur-Brennstoffzelle wird in der Druckschrift JP-A-2001-196082 offenbart. Hierin wird eine Membran-Elektroden-Einheit dargestellt, die mit einer Polyimid-Dichtung versehen ist. Problematisch an diesem Aufbau ist jedoch, dass zur Abdichtung zwei Membranen notwendig sind, zwischen denen ein Dichtring aus Polyimid vorgesehen ist. Da die Dicke der Membran aus technischen Gründen möglichst gering gewählt werden muss, ist die Dicke des Dichtrings zwischen den beiden in JP-A-2001-196082 beschriebenen Membranen äußerst begrenzt. In Langzeitversuchen wurde festgestellt, dass ein derartiger Aufbau ebenfalls nicht über einen Zeitraum von mehr als 1000 Stunden stabil ist.

Aus der Druckschrift DE 10235360 ist eine Membran-Elektroden-Einheit bekannt, die Polyimid-Schichten zur Abdichtung enthält. Diese Polyimidschichten können ggf. mit Fluorpolymeren versehen werden, um den Kontakt zu verbessern und auf die Weise die Langzeitstabilität der Membran-Elektroden-Einheit weiter zu erhöhen.

Die zuvor genannten Membran-Elektroden-Einheiten werden im Allgemeinen mit planaren Bipolarplatten verbunden, in die Kanäle für einen Gasstrom eingefräst sind. Da die Membranen teilweise eine größere Dicke aufweisen als die zuvor beschriebenen Dichtungen, wird zwischen der Dichtung der Membran-Elektroden-Einheiten und den Bipolarplatten eine weitere Dichtung eingelegt, die üblicherweise aus PTFE hergestellt wird.

Es wurde nun festgestellt, dass die Lebensdauer der zuvor beschriebenen Brennstoffzellen begrenzt ist.

Aufgabe der vorliegenden Erfindung war daher, verbesserte Membran-Elektroden-Einheiten und die damit betriebenen Brennstoffzellen bereitzustellen, die vorzugsweise die folgenden Eigenschaften aufweisen sollten:

- Die Brennstoffzellen sollten eine möglichst lange Lebensdauer zeigen.
- Die Brennstoffzellen sollten bei möglichst hohen Betriebstemperaturen, insbesondere oberhalb von 100°C, eingesetzt werden können.
- Die Einzelzellen sollten beim Betrieb eine gleichbleibende oder verbesserte Leistung über einen möglichst langen Zeitraum zeigen.
- Die Brennstoffzellen sollten nach langer Betriebszeit eine möglichst hohe Ruhespannung sowie einen möglichst geringen Gasdurchtritt aufweisen (gas-cross-over). Weiterhin sollten sie bei möglichst niedriger Stöchiometrie betrieben werden können.
- Die Brennstoffzellen sollten möglichst ohne zusätzliche Brenngasbefeuchtung auskommen.
- Die Membran-Elektroden-Einheiten sollten permanenten oder wechselnden Druckdifferenzen zwischen Anode und Kathode bestmöglich widerstehen können.
- Insbesondere sollten die Membran-Elektronen-Einheiten robust gegen unterschiedliche Betriebsbedingungen (T, p, Geometrie etc.) sein, um die allgemeine Zuverlässigkeit bestmöglich zu erhöhen.
- Die Membran-Elektroden-Einheiten sollten auf einfache Art und Weise, großtechnisch und kostengünstig hergestellt werden können.

Gelöst werden diese Aufgaben durch Membran-Elektroden-Einheiten mit allen Merkmalen des Anspruchs 1.

Gegenstand der vorliegenden Erfindung ist dementsprechend eine Membran-Elektroden-Einheit umfassend

a) zwei elektrochemisch aktive Elektroden, die durch eine Polymer-Elektrolyt-Membran getrennt werden, wobei die Oberflächen der Polymer-Elektrolyt-Membran derart mit den Elektroden in Kontakt stehen, dass die erste Elektrode die Vorderseite der Polymer-Elektrolyt-Membran und die zweite Elektrode die Rückseite der Polymer-Elektrolyt-Membran jeweils teilweise oder vollständig, vorzugsweise nur teilweise, bedeckt,

b) Dichtungsmaterial auf der Vorder- und der Rückseite der Polymer-Elektrolyt-Membran,

wobei die Polymer-Elektrolyt-Membran eine oder mehrere Aussparungen aufweist und das Dichtungsmaterial auf der Vorderseite der Polymer-Elektrolyt-Membran mit dem Dichtungsmaterial auf der Rückseite der Polymer-Elektrolyt-Membran in Kontakt steht.

Für die Zwecke der vorliegenden Erfindung geeignete Polymer-Elektrolyt-Membranen sind an sich bekannt und unterliegen grundsätzlich keiner Einschränkung. Vielmehr sind alle protonenleitenden Materialien geeignet. Vorzugsweise werden jedoch Membranen eingesetzt, die Säuren umfassen, wobei die Säuren kovalent an Polymere gebunden sein können. Des Weiteren kann ein flächiges Material mit einer Säure dotiert werden, um eine geeignete Membran zu bilden. Ferner können auch Gele, insbesondere Polymergele, als Membran verwendet werden, wobei für die vorliegenden Zwecke besonders geeignete Polymermembranen beispielsweise in der DE 102 464 61 beschrieben werden.

Diese Membranen können unter anderem durch Quellen von flächigen Materialen, beispielsweise einer Polymerfolie, mit einer Flüssigkeit, die säurehaltige Verbindungen umfasst, oder durch Herstellung einer Mischung von Polymeren und säurehaltige Verbindungen und anschließendes Bilden einer Membran durch Formen eines flächigen Gegenstandes und anschließender Verfestigung, um eine Membran zu bilden, erzeugt werden.

Zu den hierfür geeigneten Polymeren gehören unter anderem Polyolefine, wie Poly(chloropren), Polyacetylen, Polyphenylen, Poly(*p*-xylylen), Polyarylmethylen, Polystyrol, Polymethylstyrol, Polyvinylalkohol, Polyvinylacetat, Polyvinylether, Polyvinylamin, Poly(N-vinylacetamid), Polyvinylimidazol, Polyvinylcarbazol, Polyvinylpyrrolidon, Polyvinylpyridin, Polyvinylchlorid, Polyvinylidenchlorid, Polytetrafluorethylen (PTFE), Polyhexafluorpropylen, Copolymere von PTFE mit Hexafluoropropylen, mit Perfluorpropylvinylether, mit Trifluoronitrosomethan, mit Carbalkoxy-perfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, cycloolefinische Copolymere, insbesondere aus Norbornen;

Polymere mit C-O-Bindungen in der Hauptkette, beispielsweise Polyacetal, Polyoxymethylen, Polyether, Polypropylenoxid, Polyepichlorhydrin, Polytetrahydrofuran, Polyphenylenoxid, Polyetherketon, Polyester, insbesondere Polyhydroxyessigsäure, Polyethylenterephthalat, Polybutylenterephthalat, Polyhydroxybenzoat, Polyhydroxypropionsäure, Polypivalolacton, Polycaprolacton, Polymalonsäure, Polycarbonat;

Polymere mit C-S-Bindungen in der Hauptkette, beispielsweise Polysulfidether, Polyphenylensulfid, Polysulfone, Polyethersulfon;

Polymere mit C-N-Bindungen in der Hauptkette, beispielsweise Polyimine, Polyisocyanide, Polyetherimin, Polyetherimide, Polyanilin, Polyaramide, Polyamide, Polyhydrazide, Polyurethane, Polyimide, Polyazole, Polyazoletherketon, Polyazine;

flüssigkristalline Polymere, insbesondere Vectra™ sowie

anorganische Polymere, beispielsweise Polysilane, Polycarbosilane, Polysiloxane, Polykieselsäure, Polysilikate, Silicone, Polyphosphazene und Polythiazyl.

Hierbei sind basische Polymere bevorzugt, wobei dies insbesondere für Membranen gilt, die mit Säuren dotiert sind. Als mit Säure dotierte basische Polymermembran kommen nahezu alle bekannten Polymermembranen in Betracht, bei denen die Protonen transportiert werden können. Hierbei sind Säuren bevorzugt, die Protonen ohne zusätzliches Wasser, z.B. mittels des sogenannten Grotthus Mechanismus, befördern können.

Als basisches Polymer im Sinne der vorliegenden Erfindung wird vorzugsweise ein basisches Polymer mit mindestens einem Stickstoff-, Sauerstoff- oder Schwefelatom, vorzugsweise mindestens einem Stickstoffatom, in einer Wiederholungseinheit verwendet. Weiterhin werden basische Polymere, die mindestens eine Heteroarylgruppe umfassen, bevorzugt.

Die Wiederholungseinheit im basischen Polymer enthält gemäß einer bevorzugten Ausführungsform einen aromatischen Ring mit mindestens einem Stickstoffatom. Bei dem aromatischen Ring handelt es sich vorzugsweise um einen fünf- oder sechsgliedrigen Ring mit eins bis drei Stickstoffatomen, der mit einem anderen Ring, insbesondere einem anderen aromatischen Ring, anelliert sein kann.

Gemäß einem besonderen Aspekt der vorliegenden Erfindung werden hochtemperaturstabile Polymere eingesetzt, die mindestens ein Stickstoff-, Sauerstoff- und/oder Schwefelatom in einer oder in unterschiedlichen Wiederholungseinheiten enthalten.

Hochtemperaturstabil im Sinne der vorliegenden Erfindung ist ein Polymer, welches als polymerer Elektrolyt in einer Brennstoffzelle bei Temperaturen oberhalb 120°C dauerhaft betrieben werden kann. Dauerhaft bedeutet, dass eine erfindungsgemäße Membran mindestens 100 Stunden, vorzugsweise mindestens 500 Stunden, bei mindestens 80°C, vorzugsweise mindestens 120°C, besonders bevorzugt mindestens 160°C, betrieben werden kann, ohne dass die Leistung, die gemäß der in WO 01/18894 A2 beschriebenen Methode gemessen werden kann, um mehr als 50%, bezogen auf die Anfangsleistung, abnimmt.

Im Rahmen der vorliegenden Erfindung können alle vorstehend genannten Polymere einzeln oder als Mischung (Blend) eingesetzt werden. Hierbei sind insbesondere Blends bevorzugt, die Polyazole und/oder Polysulfone enthalten. Die bevorzugten Blendkomponenten sind dabei Polyethersulfon, Polyetherketon und mit Sulfonsäuregruppen modifizierte Polymere, wie in der deutschen Patentanmeldung DE 100 522 42 und DE 102 464 61 beschrieben. Durch die Verwendung von Blends können die mechanischen Eigenschaften verbessert und die Materialkosten verringert werden.

Weiterhin haben sich für die Zwecke der vorliegenden Erfindung auch Polymerblends besonders bewährt, welche mindestens ein basisches Polymer und mindestens ein saures Polymer, vorzugsweise in einem Gewichtsverhältnis von 1:99 bis 99:1, umfassen (sog. Säure-Base-Polymerblends). In diesem Zusammenhang besonders geeignete saure Polymere umfassen Polymere, welche Sulfonsäure- und/oder Phosphonsäuregruppen aufweisen. Erfindungsgemäß ganz besonders geeignete Säure-Base-Polymerblends werden beispielsweise in der Druckschrift EP1073690 A1 ausführlich beschrieben.

Eine besonders bevorzugte Gruppe von basischen Polymeren stellen Polyazole dar. Ein basisches Polymer auf Basis von Polyazol enthält wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVI) und/oder (XVII) und/oder (XVIII) und/oder (XIX) und/oder (XX) und/oder (XXI) und/oder (XXII)

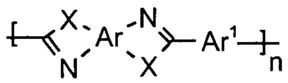

(I)

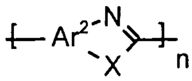

(II)

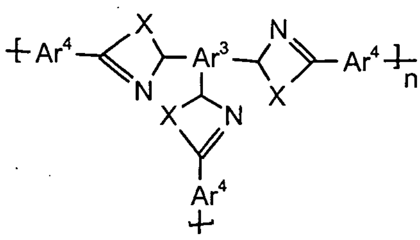

(III)

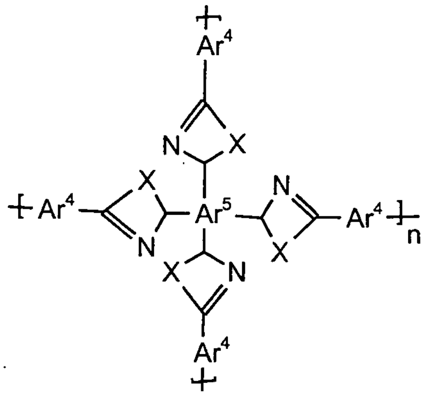

(IV)

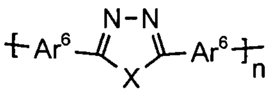

(V)

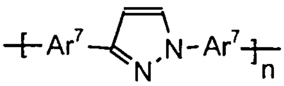

(VI)

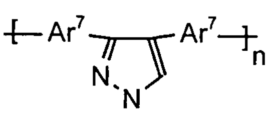

(VII)

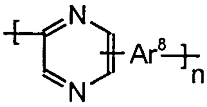

(VIII)

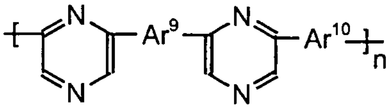

(IX)

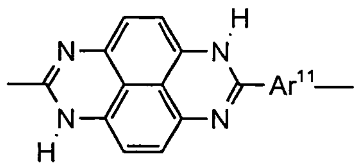

(X)

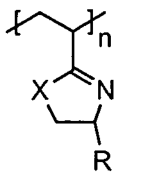

(XI)

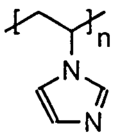

(XII)

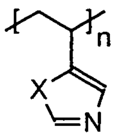

(XIII)

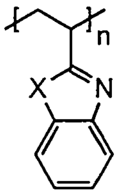

(XIV)

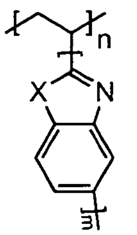

(XV)

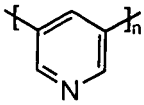

(XVI)

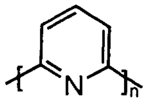

(XVII)

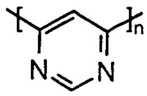

(XVIII)

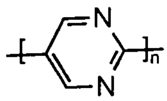

(XIX)

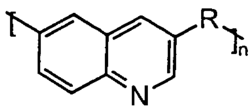

(XX)

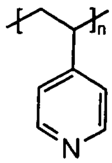

(XXI)

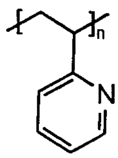

(XXII)

worin

- Ar gleich oder verschieden sind und für eine vierbindige aromatische oder heteroaromatische Gruppe stehen, die ein- oder mehrkernig sein kann,
- $Ar^1$ gleich oder verschieden sind und für eine zweibindige aromatische oder heteroaromatische Gruppe stehen, die ein- oder mehrkernig sein kann,
- $Ar^2$ gleich oder verschieden sind und für eine zwei oder dreibindige aromatische oder heteroaromatische Gruppe stehen, die ein- oder mehrkernig sein kann,
- $Ar^3$ gleich oder verschieden sind und für eine dreibindige aromatische oder heteroaromatische Gruppe stehen, die ein- oder mehrkernig sein kann,
- $Ar^4$ gleich oder verschieden sind und für eine dreibindige aromatische oder heteroaromatische Gruppe stehen, die ein- oder mehrkernig sein kann,
- $Ar^5$ gleich oder verschieden sind und für eine vierbindige aromatische oder heteroaromatische Gruppe stehen, die ein- oder mehrkernig sein kann,
- $Ar^6$ gleich oder verschieden sind und für eine zweibindige aromatische oder heteroaromatische Gruppe stehen, die ein- oder mehrkernig sein kann,
- $Ar^7$ gleich oder verschieden sind und für eine zweibindige aromatische oder heteroaromatische Gruppe stehen, die ein- oder mehrkernig sein kann,
- $Ar^8$ gleich oder verschieden sind und für eine dreibindige aromatische oder heteroaromatische Gruppe stehen, die ein- oder mehrkernig sein kann,
- $Ar^9$ gleich oder verschieden sind und für eine zwei- oder drei- oder vierbindige aromatische oder heteroaromatische

Gruppe stehen, die ein- oder mehrkernig sein kann,

$Ar^{10}$ gleich oder verschieden sind und für eine zwei- oder dreibindige aromatische oder heteroaromatische Gruppe stehen, die ein- oder mehrkernig sein kann,

$Ar^{11}$ gleich oder verschieden sind und für eine zweibindige aromatische oder heteroaromatische Gruppe stehen, die ein- oder mehrkernig sein kann,

X gleich oder verschieden ist und für Sauerstoff, Schwefel oder eine Aminogruppe steht, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt

R in allen Formeln außer Formel (XX) gleich oder verschieden für Wasserstoff, eine Alkylgruppe oder eine aromatische Gruppe und in Formel (XX) für eine Alkylengruppe oder eine aromatische Gruppe steht und

n, m eine ganze Zahl größer gleich 10, bevorzugt größer gleich 100 ist.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Pyridazin, Pyrimidin, Pyrazin, Triazin, Tetrazin, Pyrol, Pyrazol, Anthracen, Benzopyrrol, Benzotriazol, Benzooxathiadiazol, Benzooxadiazol, Benzopyridin, Benzopyrazin, Benzopyrazidin, Benzopyrimidin, Benzopyrazin, Benzotriazin, Indolizin, Chinolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren, die gegebenenfalls auch substituiert sein können, ab.

Dabei ist das Substitionsmuster von $Ar^1$, $Ar^4$, $Ar^6$, $Ar^7$, $Ar^8$, $Ar^9$, $Ar^{10}$, $Ar^{11}$ beliebig, im Falle vom Phenylen beispielsweise kann $Ar^1$, $Ar^4$, $Ar^6$, $Ar^7$, $Ar^8$, $Ar^9$, $Ar^{10}$, $Ar^{11}$ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen, wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine) und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben:

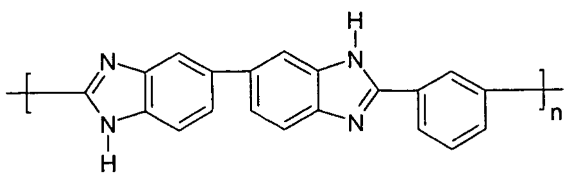

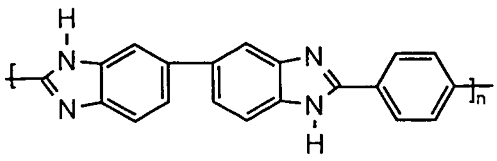

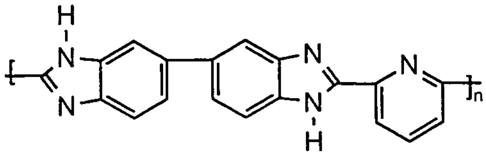

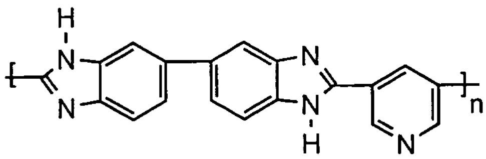

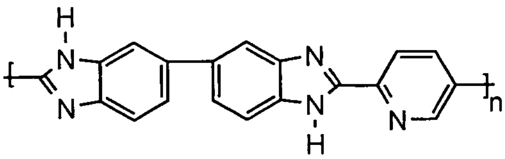

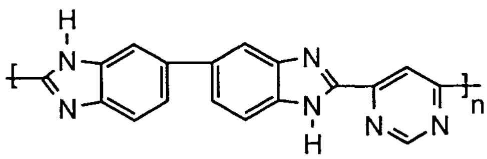

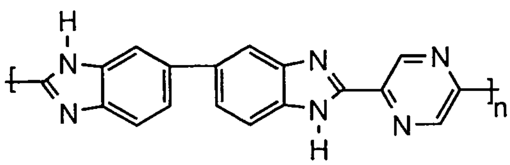

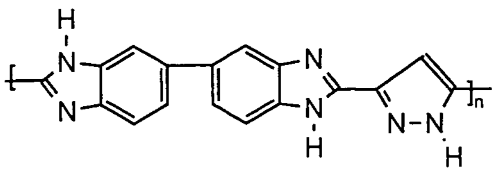

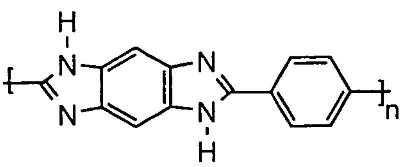

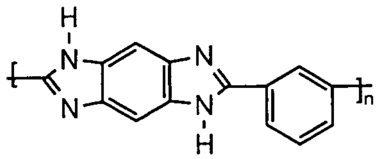

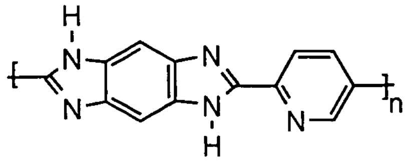

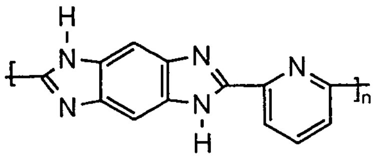

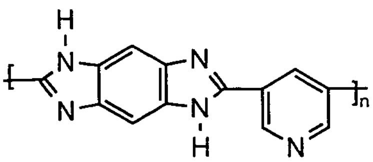

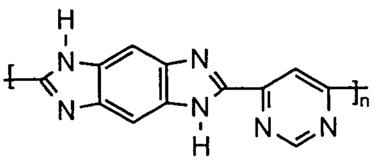

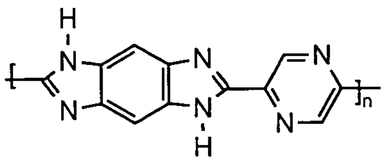

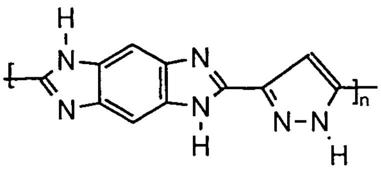

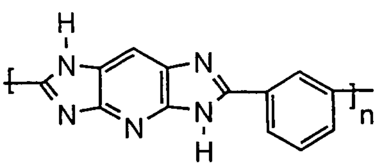

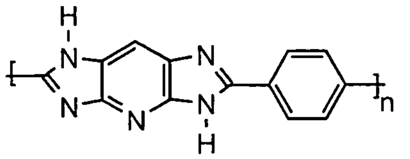

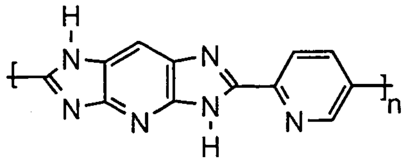

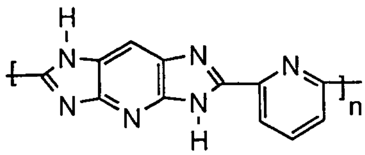

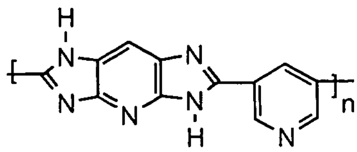

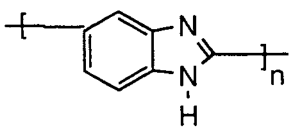

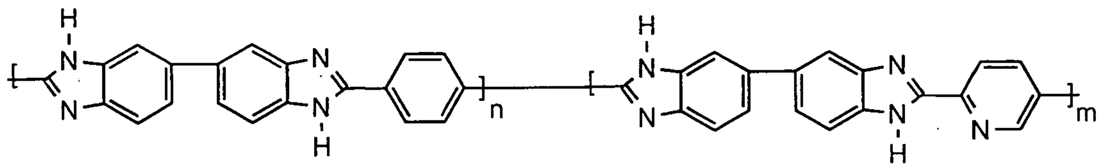

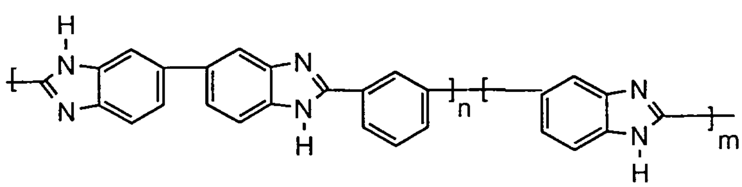

wobei n und m ganze Zahlen größer gleich 10, vorzugsweise größer gleich 100, sind.

Die eingesetzten Polyazole, insbesondere jedoch die Polybenzimidazole zeichnen sich durch ein hohes Molekulargewicht aus. Gemessen als intrinsische Viskosität beträgt diese mindestens 0,2 dl/g, vorzugsweise 0,8 bis 10 dl/g, insbesondere 1 bis 10 dl/g.

Die Herstellung derartiger Polyazole ist bekannt, wobei ein oder mehrere aromatische Tetra-Amino-Verbindungen mit ein oder mehreren aromatischen Carbonsäuren bzw. deren Estern, die mindestens zwei Säuregruppen pro

Carbonsäure-Monomer enthalten, in der Schmelze zu einem Präpolymer umgesetzt werden. Das entstehende Präpolymer erstarrt im Reaktor und wird anschließend mechanisch zerkleinert. Das pulverförmige Präpolymer wird üblich in einer Festphasen-Polymerisation bei Temperaturen von bis zu 400°C endpolymerisiert.

Zu den bevorzugten aromatischen Carbonsäuren gehören unter anderem Di-carbonsäuren und Tri-carbonsäuren und Tetra-Carbonsäuren bzw. deren Estern oder deren Anhydride oder deren Säurechloride. Der Begriff aromatische Carbonsäuren umfaßt gleichermaßen auch heteroaromatische Carbonsäuren.

Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure, 3,4-Dihydroxyphthalsäure, 3-Fluorophthalsäure, 5-Fluoroisophthalsäure, 2-Fluoroterephthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-Dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis-(4-carboxyphenyl)-hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

Bei den aromatischen Tri-, Tetra-carbonsäuren bzw. deren C1-C20-Alkyl-Ester oder C5-C12-Aryl-Ester oder deren Säureanhydride oder deren Säurechloride handelt es sich bevorzugt um 1,3,5-Benzol-tricarbonsäure (Trimesic acid), 1,2,4-Benzol-tricarbonsäure (Trimellitic acid), (2-Carboxyphenyl)-iminodiessigsäure, 3,5,3'-Biphenyltricarbonsäure oder 3,5,4'-Biphenyltricarbonsäure.

Bei den aromatischen Tetracarbonsäuren bzw. deren C1-C20-Alkyl-Ester oder C5-C12-Aryl-Ester oder deren Säureanhydride oder deren Säurechloride handelt es sich bevorzugt um 3,5,3',5'-Biphenyltetracarboxylsäure, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure oder 1,4,5,8-Naphthalintetracarbonsäure.

Bevorzugt handelt es sich bei den eingesetzten heteroaromatischen Carbonsäuren um heteroaromatischen Di-carbonsäuren oder Tri-carbonsäuren oder Tetra-Carbonsäuren bzw. deren Estern oder deren Anhydride. Als heteroaromatische Carbonsäuren werden aromatische Systeme verstanden, welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure, 2,5-Pyrazindicarbonsäure, 2,4,6-Pyridintricarbonsäure oder Benzimidazol-5,6-dicarbonsäure oder deren C1-C20-Alkyl-Ester oder C5-C12-Aryl-Ester, oder deren Säureanhydride oder deren Säurechloride.

Der Gehalt an Tri-carbonsäure bzw. Tetracarbonsäuren (bezogen auf eingesetzte Dicarbonsäure) beträgt zwischen 0 und 30 Mol-%, vorzugsweise 0,1 und 20 Mol %, insbesondere 0,5 und 10 Mol-%.

Bevorzugt handelt es sich bei den eingesetzten aromatischen und heteroaromatischen Diaminocarbonsäuren um Diaminobenzoesäure oder deren Mono- und Dihydrochloridderivate.

Bevorzugt werden Mischungen von mindestens 2 verschiedenen aromatischen Carbonsäuren eingesetzt. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise 1:50 bis 50:1.

Bei diesem Mischungen handelt es sich insbesondere um Mischungen von N-heteroaromatischen Di-carbonsäuren und aromatischen Dicarbonsäuren. Nicht limitierende Beispiele dafür sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-Dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure, 2,5-Pyrazindicarbonsäure.

Zu den bevorzugten aromatische Tetra-Amino-Verbindungen gehören unter anderem 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate.

Bevorzugte Polybenzimidazole sind unter dem Handelsnamen ®Celazole von Celanese AG kommerziell erhältlich.

Zu den bevorzugten Polymeren gehören Polysulfone, insbesondere Polysulfon mit aromatischen und/oder heteroaromatischen Gruppen in der Hauptkette. Gemäß einem besonderen Aspekt der vorliegenden Erfindung weisen

bevorzugte Polysulfone und Polyethersulfone eine Schmelzvolumenrate MVR 300/21,6 kleiner oder gleich 40 $cm^3$/10 min, insbesondere kleiner oder gleich 30 $cm^3$/10 min und besonders bevorzugt kleiner oder gleich 20 $cm^3$/10 min gemessen nach ISO 1133 auf. Hierbei sind Polysulfone mit einer Vicat-Erweichungstemperatur VST/A/50 von 180°C bis 230°C bevorzugt. In noch einer bevorzugten Ausführungsform der vorliegenden Erfindung ist das Zahlenmittel des Molekulargewichts von den Polysulfonen größer als 30.000 g/mol.

Zu den Polymeren auf Basis von Polysulfon gehören insbesondere Polymere, welche wiederkehrende Einheiten mit verknüpfenden Sulfon-Gruppen entsprechend den allgemeinen Formeln A, B, C, D, E, F und/oder G aufweisen:

$$-O-R-SO_2-R- \qquad (A)$$

$$-O-R-SO_2-R-O-R- \qquad (B)$$

$$-O-R-SO_2-R-O-R-R- \qquad (C)$$

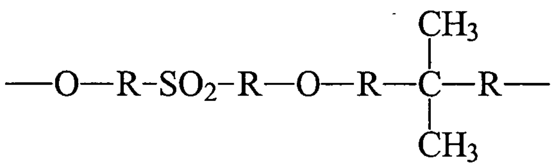

(D)

$$-O-R-SO_2-R-R-SO_2-R- \qquad (E)$$

$$-O-R-SO_2-R-R-SO_2-R-O-R-SO_2-] \qquad (F)$$

$$[-O-R-SO_2-R-]-[SO_2-R-R-] \qquad (G),$$

worin die Reste R unabhängig voneinander gleich oder verschieden eine aromatische oder heteroaromatische Gruppen darstellen, wobei diese Reste zuvor näher erläutert wurden. Hierzu gehören insbesondere 1,2-Phenylen, 1,3-Phenylen, 1,4-Phenylen, 4,4'-Biphenyl, Pyridin, Chinolin, Naphthalin, Phenanthren.

Zu den im Rahmen der vorligenden Erfunding bevorzugten Polysulfone gehören Homo- und Copolymere, beispielsweise statistische Copolymere. Besonders bevorzugte Polysulfone umfassen wiederkehrende Einheiten der Formeln H bis N:

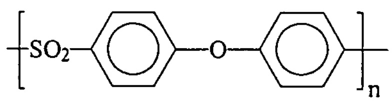

(H)

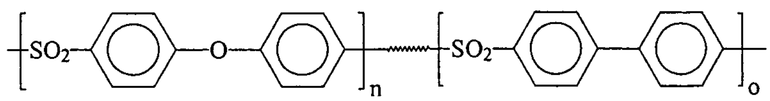

(I)

mit n > 0

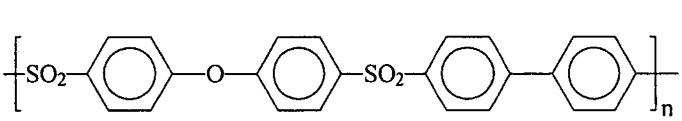

(J)

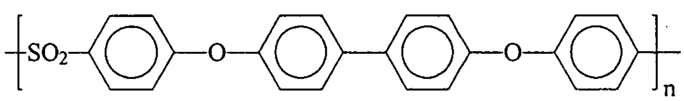

(K)

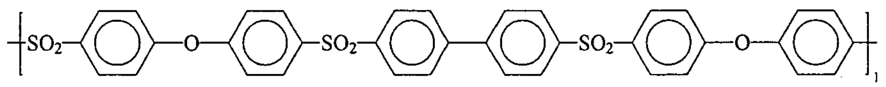

(L)

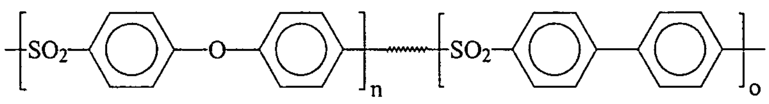

(M)

mit n < 0

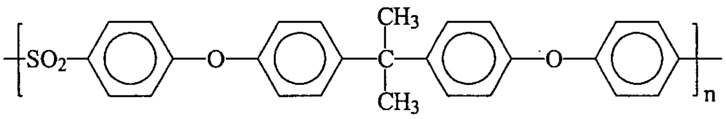

(N)

Die zuvor beschriebenen Polysulfone können unter den Handelsnamen ®Victrex 200 P, ®Victrex 720 P, ®Ultrason E, ®Ultrason S, ®Mindel, ®Radel A, ®Radel R, ®Victrex HTA, ®Astrel und ®Udel kommerziell erhalten werden.

Darüber hinaus sind Polyetherketone, Polyetherketonketone, Polyetheretherketone, Polyetheretherketonketone und Polyarylketone besonders bevorzugt. Diese Hochleistungspolymere sind an sich bekannt und können unter den Handelsnamen Victrex® PEEK™, ®Hostatec, ®Kadel kommerziell erhalten werden.

Zur Herstellung von Polymerfolien kann ein Polymer, vorzugsweise ein Polyazol in einem weiteren Schritt in polaren, aprotischen Lösemitteln, wie beispielsweise Dimethylacetamid (DMAc), gelöst und eine Folie mittels klassischer Verfahren erzeugt werden.

Zur Entfernung von Lösemittelresten kann die so erhaltene Folie mit einer Waschflüssigkeit wie in der deutschen Patentanmeldung DE 101 098 29 behandelt werden. Durch die in der deutschen Patentanmeldung beschriebene Reinigung der Polyazolfolie von Lösungsmittelresten verbessern sich überraschend die mechanischen Eigenschaften der Folie. Diese Eigenschaften umfassen insbesondere den E-Modul, die Reißfestigkeit und die Bruchzähigkeit der Folie.

Zusätzlich kann der Polymerfilm weitere Modifizierungen, beispielsweise durch Vernetzung, wie in der deutschen Patentanmeldung DE 101 107 52 oder in WO 00/44816 beschrieben, aufweisen. In einer bevorzugten Ausführungsform enthält die eingesetzte Polymerfolie aus einem basischen Polymer und mindestens einer Blendkomponente zusätzlich einem Vernetzer, wie in der deutschen Patentanmeldung DE 101 401 47 beschrieben.

Die Dicke der Polyazolfolien kann in weiten Bereichen liegen. Vorzugsweise liegt die Dicke der Polyazolfolie vor einer Dotierung mit Säure im Bereich von 5 μm bis 2000 μm, besonders bevorzugt im Bereich von 10 μm bis 1000 μm, ohne dass hierdurch eine Beschränkung erfolgen soll.

Um eine Protonen-Leitfähigkeit zu erzielen, werden diese Folien mit einer Säure dotiert. Säuren umfassen in diesem Zusammenhang alle bekannten Lewis- und Brønsted-Säuren, vorzugsweise anorganische Lewis- und Bronsted-Säuren.

Weiterhin ist auch der Einsatz von Polysäuren möglich, insbesondere Isopolysäuren und Heteropolysäuren sowie von Mischungen verschiedener Säuren. Dabei bezeichnen im Sinne der vorliegenden Erfindung Heteropolysäuren anorganische Polysäuren mit mindestens zwei verschiedenen Zentralatomen, die aus jeweils schwachen, mehrbasischen Sauerstoff-Säuren eines Metalls (vorzugsweise Cr, Mo, V, W) und eines Nichtmetalls (vorzugsweise As, I, P, Se, Si, Te) als partielle gemischte Anhydride entstehen. Zu ihnen gehören unter anderen die 12-Molybdatophosphorsäure und die 12-Wolframatophosphorsäure.

Über den Dotierungsgrad kann die Leitfähigkeit der Polyazolfolie beeinflußt werden. Dabei nimmt die Leitfähigkeit mit steigender Konzentration an Dotierungsmittel solange zu, bis ein maximaler Wert erreicht ist.
Erfindungsgemäß wird der Dotierungsgrad angegeben als Mol Säure pro Mol Wiederholungseinheit des Polymers. Im Rahmen der vorliegenden Erfindung ist ein Dotierungsgrad zwischen 3 und 80, zweckmäßigerweise zwischen 5 und 60, insbesondere zwischen 12 und 60, bevorzugt.

Besonders bevorzugte Dotierungsmittel sind Schwefelsäure und Phosphorsäure, bzw. Verbindungen, die diese Säuren, beispielsweise bei Hydrolyse freisetzen. Ein ganz besonders bevorzugtes Dotierungsmittel ist Phosphorsäure ($H_3PO_4$). Hierbei werden im Allgemeinen hochkonzentrierte Säuren eingesetzt. Gemäß einem besonderen Aspekt der vorliegenden Erfindung beträgt die Konzentration der Phosphorsäure mindestens 50% Gew.-%, insbesondere mindestens 80 Gew.-%, bezogen auf das Gewicht des Dotierungsmittels.

Des Weiteren können protonenleitfähige Membranen auch durch ein Verfahren erhalten werden umfassend die Schritte

I) Lösen von Polymeren, insbesondere Polyazolen in Polyphosphorsäure,
II) Erwärmen der Lösung erhältlich gemäß Schritt I) unter Inertgas auf Temperaturen von bis zu 400°C,
III) Bilden einer Membran unter Verwendung der Lösung des Polymeren gemäß Schritt II) auf einem Träger und
IV) Behandlung der in Schritt III) gebildeten Membran bis diese selbsttragend ist.

Weitere Details können zu derartigen protonenleitende Membranen können beispielsweise der DE 102 464 61 entnommen werden. Sie sind beispielsweise unter dem Handelsnamen Celtec® erhältlich.
Des Weiteren können dotierte Polyazolfolien durch ein Verfahren erhalten werden umfassend die Schritte

A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion
B) Aufbringen einer Schicht unter Verwendung der Mischung gemäß Schritt A) auf einem Träger oder auf einer Elektrode,
C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren .
D) Behandlung der in Schritt C) gebildeten Membran (bis diese selbsttragend ist).

Weitere Details können zu derartigen protonenleitende Membranen können beispielsweise der DE 102 464 59 entnommen werden. Sie sind beispielsweise unter dem Handelsnamen Celtec® erhältlich.
Die in Schritt A) einzusetzenden aromatischen bzw. heteroaromatischen Carbonsäure- und Tetra-Amino-Verbindungen wurden zuvor beschrieben.
Bei der in Schritt A) verwendeten Polyphosphorsäure handelt es sich um handelsübliche Polyphosphorsäuren, wie diese beispielsweise von Riedel-de Haen erhältlich sind. Die Polyphosphorsäuren $H_{n+2}P_nO_{3n+1}$ (n>1) besitzen üblicherweise einen Gehalt berechnet als $P_2O_5$ (acidimetrisch) von mindestens 83%. Anstelle einer Lösung der Monomeren kann auch eine Dispersion/Suspension erzeugt werden.
Die in Schritt A) erzeugte Mischung weist ein Gewichtsverhältnis Polyphosphorsäure zu Summe aller Monomeren von 1:10000 bis 10000:1, vorzugsweise 1:1000 bis 1000:1, insbesondere 1:100 bis 100:1, auf.
Die Schichtbildung gemäß Schritt B) erfolgt mittels an sich bekannter Maßnahmen (Gießen, Sprühen, Rakeln) die aus dem Stand der Technik zur Polymerfilm-Herstellung bekannt sind. Als Träger sind alle unter den Bedingungen als inert zu bezeichnenden Träger geeignet. Zur Einstellung der Viskosität kann die Lösung gegebenenfalls mit Phosphorsäure (konz. Phosphorsäure, 85%) versetzt werden. Hierdurch kann die Viskosität auf den gewünschten Wert eingestellt und die Bildung der Membran erleichtert werden.
Die gemäß Schritt B) erzeugte Schicht hat eine Dicke zwischen 20 und 4000 $\mu$m, vorzugsweise zwischen 30 und 3500 $\mu$m, insbesondere zwischen 50 und 3000 $\mu$m.
Insofern die Mischung gemäß Schritt A) auch Tricarbonsäuren bzw. Tetracarbonsäure enthält, wird hierdurch eine Verzweigung/ Vernetzung des gebildeten Polymeren erzielt. Diese trägt zur Verbesserung der mechanischen Eigenschaft bei.
Behandlung der gemäß Schritt C) erzeugten Polymerschicht in Gegenwart von Feuchtigkeit bei Temperaturen und für eine Dauer ausreichend bis die Schicht eine ausreichende Festigkeit für den Einsatz in Brennstoffzellen besitzt. Die Behandlung kann soweit erfolgen, dass die Membran selbsttragend ist, so dass sie ohne Beschädigung vom Träger abgelöst werden kann.
Gemäß Schritt C) wird das in Schritt B) erhaltene flächige Gebilde auf eine Temperatur von bis zu 350°C, vorzugsweise bis zu 280°C und besonders bevorzugt im Bereich von 200°C bis 250°C erhitzt. Die in Schritt C) einzusetzenden Inertgase sind in der Fachwelt bekannt. Zu diesen gehören insbesondere Stickstoff sowie Edelgase, wie Neon, Argon, Helium.
In einer Variante des Verfahrens kann durch Erwärmen der Mischung aus Schritt A) auf Temperaturen von bis zu 350°C, vorzugsweise bis zu 280°C, bereits die Bildung von Oligomeren und/oder Polymeren bewirkt werden. In Abhängigkeit von der gewählten Temperatur und Dauer, kann anschließend auf die Erwärmung in Schritt C) teilweise oder gänzlich verzichtet werden. Auch diese Variante ist Gegenstand der vorliegenden Erfindung.
Die Behandlung der Membran in Schritt D) erfolgt bei Temperaturen oberhalb 0°C und kleiner 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf bzw. und/oder wasserenthaltende Phosphorsäure von bis zu 85%. Die Behandlung erfolgt vorzugsweise unter Normaldruck, kann aber auch unter Einwirkung von Druck erfolgen. Wesentlich ist, dass die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Membran beiträgt.

Die partielle Hydrolyse der Polyphosphorsäure in Schritt D) führt zu einer Verfestigung der Membran und zu einer Abnahme der Schichtdicke und Ausbildung einer Membran mit einer Dicke zwischen 15 und 3000 μm, vorzugsweise zwischen 20 und 2000 μm, insbesondere zwischen 20 und 1500 μm, die selbsttragend ist.

Die in der Polyphosphorsäureschicht gemäß Schritt B) vorliegenden intra- und intermolekularen Strukturen (Interpenetrierende Netzwerke IPN) führen in Schritt C) zu einer geordneten Membranbildung, welche für die besonderen Eigenschaften der gebildeten Membran verantwortlich zeichnet.

Die obere Temperaturgrenze der Behandlung gemäß Schritt D) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt D) kann auch in Klimakammern erfolgen, bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase, wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die gemäß Schritt D) erhaltene Membran kann selbsttragend ausgebildet werden, d.h. sie kann vom Träger ohne Beschädigung gelöst und anschließend gegebenenfalls direkt weiterverarbeitet werden.

Über den Grad der Hydrolyse, d.h. die Dauer, Temperatur und Umgebungsfeuchtigkeit, ist die Konzentration an Phosphorsäure und damit die Leitfähigkeit der Polymermembran einstellbar. Die Konzentration der Phosphorsäure wird als Mol Säure pro Mol Wiederholungseinheit des Polymers angegeben. Durch das Verfahren umfassend die Schritte A) bis D) können Membranen mit einer besonders hohen Phosphorsäurekonzentration erhalten werden. Bevorzugt ist eine Konzentration (Mol Phosphorsäure bezogen auf eine Wiederholeinheit der Formel (I), beispielsweise Polybenzimidazol) zwischen 10 und 50, insbesondere zwischen 12 und 40. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

Gemäß einer Abwandlung des zur beschriebenen Verfahrens, bei dem dotierte Polyazolfolien durch die Verwendung von Polyphosphorsäure hergestellt werden, kann die Herstellung dieser Folien auch durch ein Verfahren erfolgen umfassend die Schritte

1) Umsetzung von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 350°C, vorzugsweise bis zu 300°C,
2) Lösen des gemäß Schritt 1) erhaltenen festen Prä-Polymeren in Polyphosphorsäure,
3) Erwärmen der Lösung erhältlich gemäß Schritt 2) unter Inertgas auf Temperaturen von bis zu 300°C, vorzugsweise bis zu 280°C, unter Ausbildung des gelösten Polyazol-Polymeren,
4) Bilden einer Membran unter Verwendung der Lösung des Polyazol-Polymeren gemäß Schritt 3) auf einem Träger und
5) Behandlung der in Schritt 4) gebildeten Membran bis diese selbsttragend ist.

Die unter den Punkten 1) bis 5) dargestellten Verfahrensschritten wurden zuvor für die Schritte A) bis D) näher erläutert, wobei hierauf, insbesondere im Hinblick auf bevorzugte Ausführungsformen Bezug genommen wird.

Weitere Details können zu derartigen protonenleitende Membranen können beispielsweise der DE 102 464 59 entnommen werden. Sie sind beispielsweise unter dem Handelsnamen Celtec® erhältlich.

In einer weiteren bevorzugten Ausführungsform der vorliegenden Erfindung werden Membranen eingesetzt, die Polymere umfassen, die von Phosphonsäuregruppen umfassenden Monomeren und/oder Sulfonsäuregruppen umfassenden Monomeren abgeleitet sind, und die beispielsweise unter dem Handelsnamen Celtec® erhältlich sind.

Diese protonenleitende Polymermembran sind unter anderem erhältlich durch ein, beispielsweise in DE 102 135 40 beschriebenen, Verfahren umfassend die Schritte

A) Herstellung einer Mischung umfassend Phosphonsäuregruppen-umfassende Monomere und mindestens ein Polymer,

B) Aufbringen einer Schicht unter Verwendung der Mischung gemäß Schritt A) auf einem Träger,
C) Polymerisation der in dem flächigen Gebilde erhältlich gemäß Schritt B) vorhandenen Phosphonsäuregruppen umfassende Monomere.

Des Weiteren sind derartige protonenleitende Polymermembran erhältlich durch ein, beispielsweise in DE 102 094 19 beschriebenen, Verfahren umfassend die Schritte

I) Quellen einer Polymerfolie mit einer Flüssigkeit, die Phosphonsäuregruppen umfassende Monomere enthält und
II) Polymerisation mindestens eines Teils der Phosphonsäuregruppen umfassenden Monomeren, die in Schritt I) in die Polymerfolie eingebracht wurden.

Als Quellung wird eine Gewichtszunahme der Folie von mindestens 3 Gew.-% verstanden. Bevorzugt beträgt die Quellung mindestens 5 %, besonders bevorzugt mindestens 10%.
Bestimmung der Quellung Q wird gravimetrisch bestimmt aus der Masse des Filmes vor der Quellung $m_o$ und der Masse des Filmes nach der Polymerisation gemäß Schritt B), $m_2$.

$$Q = (m_2 - m_0)/m_0 \times 100$$

Die Quellung erfolgt vorzugsweise bei einer Temperatur oberhalb 0°C, insbesondere zwischen Raumtemperatur (20°C) und 180°C in einer Flüssigkeit, die vorzugsweise mindestens 5 Gew.-% Phosphonsäuregruppen umfassende Monomere enthält. Des Weiteren kann die Quellung auch bei erhöhtem Druck durchgeführt werden. Hierbei ergeben sich die Grenzen aus wirtschaftlichen Überlegungen und technischen Möglichkeiten.
Die zur Quellung eingesetzte Polymerfolie weist im Allgemeinen eine Dicke im Bereich von 5 bis 3000 µm, vorzugsweise 10 bis 1500 µm auf. Die Herstellung derartiger Folien aus Polymeren ist im Allgemeinen bekannt, wobei diese teilweise kommerziell erhältlich sind. Der Begriff Polymerfolie bedeutet, dass die zum Quellen einzusetzende Folie Polymere mit aromatischen Sulfonsäuregruppen umfasst, wobei diese Folie weitere allgemein übliche Additive enthalten kann.
Die Herstellung der Folien sowie bevorzugte Polymere, insbesondere Polyazole und/oder Polysulfone wurden zuvor beschrieben.
Die Flüssigkeit, die Phosphonsäuregruppen umfassende Monomere und/oder Sulfonsäuregruppen umfassende Monomere enthält, kann eine Lösung darstellen, wobei die Flüssigkeit auch suspendierte und/oder dispergierte Bestandteile enthalten kann. Die Viskosität der Flüssigkeit, die Phosphonsäuregruppen umfassende Monomere enthält, kann in weiten Bereichen liegen, wobei zur Einstellung der Viskosität eine Zugabe von Lösungsmitteln oder eine Temperaturerhöhung erfolgen kann. Vorzugsweise liegt die dynamische Viskosität im Bereich von 0,1 bis 10000 mPa*s, insbesondere 0,2 bis 2000 mPa*s, wobei diese Werte beispielsweise gemäß DIN 53015 gemessen werden können.
Phosphonsäuregruppen umfassende Monomere und/oder Sulfonsäuregruppen umfassende Monomere sind in der Fachwelt bekannt. Es handelt sich hierbei um Verbindungen, die mindestens eine Kohlenstoff-Kohlenstoff-Doppelbindung und mindestens eine Phosphonsäuregruppe aufweisen. Vorzugsweise weisen die zwei Kohlenstoffatome, die Kohlenstoff-Kohlenstoff-Doppelbindung bilden, mindestens zwei, vorzugsweise 3 Bindungen zu Gruppen auf, die zu einer geringen sterischen Hinderung der Doppelbindung führen. Zu diesen Gruppen gehören unter anderem Wasserstoffatome und Halogenatome, insbesondere Fluoratome. Im Rahmen der vorliegenden Erfindung ergibt sich das Phosphonsäuregruppen umfassende Polymer aus dem Polymerisationsprodukt, das durch Polymerisation des Phosphonsäuregruppen umfassenden Monomers allein oder mit weiteren Monomeren und/oder Vernetzern erhalten wird.
Das Phosphonsäuregruppen umfassende Monomer kann ein, zwei, drei oder mehr Kohlenstoff-Kohlenstoff-Doppelbindungen umfassen. Des Weiteren kann das Phosphonsäuregruppen umfassende Monomer ein, zwei, drei oder mehr Phosphonsäuregruppen enthalten.
Im Allgemeinen enthält das Phosphonsäuregruppen umfassende Monomer 2 bis 20, vorzugsweise 2 bis 10, Kohlenstoffatome.
Bei dem zur Herstellung der Phosphonsäuregruppen umfassenden Polymere verwendeten Phosphonsäuregruppen umfassenden Monomer handelt es sich vorzugsweise um Verbindungen der Formel

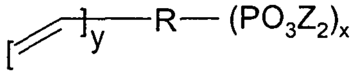

worin

R eine Bindung, eine zweibindige C1-C15-Alkylengruppe, zweibindige C1-C15-Alkylenoxygruppe, beispielsweise eine Ethylenoxygruppe, oder eine zweibindige C5-C20-Aryl- oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet
y eine ganze Zahl 1, 2, 3, 4, 5, 6, 7, 8, 9 oder 10 bedeutet

und/oder der Formel

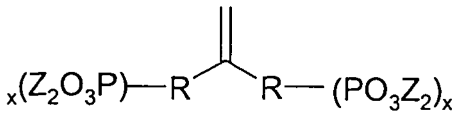

worin

R eine Bindung, eine zweibindige C1-C15-Alkylengruppe, zweibindige C1-C15-Alkylenoxygruppe, beispielsweise eine Ethylenoxygruppe, oder eine zweibindige C5-C20-Aryl- oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, beispielsweise eine Ethylenoxygruppe oder eine C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet

und/oder der Formel

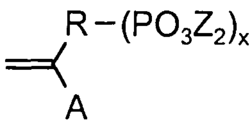

worin

A eine Gruppe der Formel $COOR^2$, CN, $CONR^2_2$, $OR^2$ und/oder $R^2$ darstellt,
$R^2$ Wasserstoff, eine C1-C15-Alkylgruppe, C1-C15-Alkoxygruppe, beispielsweise eine Ethylenoxygruppe oder eine C5-C20-Aryl oder Heteroarylgruppe bedeutet, wobei die vorstehenden Reste ihrerseits mit Halogen, -OH, COOZ, - CN, $NZ_2$ substituiert sein können
R eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, $NZ_2$ substituiert sein können,
Z unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
x eine ganze Zahl 1, 2, 3, 4, 5, 6, 7, 8, 9 oder 10 bedeutet.

Zu den bevorzugten Phosphonsäuregruppen umfassenden Monomeren gehören unter anderem Alkene, die Phosphonsäuregruppen aufweisen, wie Ethenphosphonsäure, Propenphosphonsäure, Butenphosphonsäure; Acrylsäure- und/oder Methacrylsäure-Verbindungen, die Phosphonsäuregruppen aufweisen, wie beispielsweise 2-Phosphonomethyl-acrylsäure, 2-Phosphonomethyl-methacrylsäure, 2-Phosphonomethyl-acrylsäureamid und 2-Phosphonomethyl-methacrylsäureamid.

Besonders bevorzugt wird handelsübliche Vinylphosphonsäure (Ethenphosphonsäure), wie diese beispielsweise von der Firma Aldrich oder Clariant GmbH erhältlich ist, eingesetzt. Eine bevorzugte Vinylphosphonsäure weist

eine Reinheit von mehr als 70%, insbesondere 90 % und besonders bevorzugt mehr als 97% Reinheit auf.

Die Phosphonsäuregruppen umfassenden Monomere können des Weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Phosphonsäuregruppen umfassenden Monomere.

Die eingesetzte Flüssigkeit umfasst vorzugsweise mindestens 20 Gew.-%, insbesondere mindestens 30 Gew.-% und besonders bevorzugt mindestens 50 Gew.-%, bezogen auf das Gesamtgewicht der Mischung, Phosphonsäuregruppen umfassende Monomere und/oder Sulfonsäuregruppen umfassende Monomere.

Die eingesetzt Flüssigkeit kann zusätzlich noch weitere organische und/oder anorganische Lösungsmittel enthalten. Zu den organischen Lösungsmitteln gehören insbesondere polar aprotische Lösungsmittel, wie Dimethylsulfoxid (DMSO), Ester, wie Ethylacetat, und polar protische Lösungsmittel, wie Alkohole, wie Ethanol, Propanol, Isopropanol und/oder Butanol. Zu dem anorganischen Lösungsmittel zählen insbesondere Wasser, Phosphorsäure und Polyphosphorsäure.

Diese können die Verarbeitbarkeit positiv beeinflussen. Insbesondere kann durch Zugabe des organischen Lösungsmittels die Aufnahmefähigkeit der Folie in Bezug auf die Monomere verbessert werden. Der Gehalt an Phosphonsäuregruppen umfassenden Monomeren und/oder Sulfonsäuregruppen umfassenden Monomeren in solchen Lösungen beträgt im Allgemeinen mindestens 5 Gew.-%, vorzugsweise mindestens 10 Gew.-%, besonders bevorzugt zwischen 10 und 97 Gew.-%.

Sulfonsäuregruppen umfassende Monomere sind in der Fachwelt bekannt. Es handelt sich hierbei um Verbindungen, die mindestens eine Kohlenstoff-Kohlenstoff-Doppelbindung und mindestens eine Sulfonsäuregruppe aufweisen. Vorzugsweise weisen die zwei Kohlenstoffatome, die Kohlenstoff-Kohlenstoff-Doppelbindung bilden, mindestens zwei, vorzugsweise 3 Bindungen zu Gruppen auf, die zu einer geringen sterischen Hinderung der Doppelbindung führen. Zu diesen Gruppen gehören unter anderem Wasserstoffatome und Halogenatome, insbesondere Fluoratome. Im Rahmen der vorliegenden Erfindung ergibt sich das Sulfonsäuregruppen umfassende Polymer aus dem Polymerisationsprodukt, das durch Polymerisation des Sulfonsäuregruppen umfassenden Monomers allein oder mit weiteren Monomeren und/oder Vernetzern erhalten wird.

Das Sulfonsäuregruppen umfassende Monomer kann ein, zwei, drei oder mehr Kohlenstoff-Kohlenstoff-Doppelbindungen umfassen. Des Weiteren kann das Sulfonsäuregruppen umfassende Monomer ein, zwei, drei oder mehr Sulfonsäuregruppen enthalten.

Im Allgemeinen enthält das Sulfonsäuregruppen umfassende Monomer 2 bis 20, vorzugsweise 2 bis 10 Kohlenstoffatome.

Bei dem Sulfonsäuregruppen umfassenden Monomer handelt es sich vorzugsweise um Verbindungen der Formel

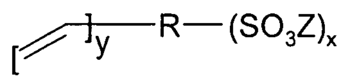

worin

- R eine Bindung, eine zweibindige C1-C15-Alkylengruppe, zweibindige C1-C15-Alkylenoxygruppe, beispielsweise eine Ethylenoxygruppe, oder eine zweibindige C5-C20-Aryl- oder Heteroarylgruppe bedeutet, wobei die vorstehenden Reste ihrerseits mit Halogen, -OH, COOZ, -CN, $NZ_2$ substituiert sein können,
- Z unabhängig voneinander Wasserstoff, C1-C15-Alkylgruppe, C1-C15-Alkoxygruppe, beispielsweise eine Ethylenoxygruppe, oder eine C5-C20-Aryl oder Heteroarylgruppe bedeutet, wobei die vorstehenden Reste ihrerseits mit Halogen, -OH, -CN, substituiert sein können und
- x eine ganze Zahl 1, 2, 3, 4, 5, 6, 7, 8, 9 oder 10 bedeutet
- y eine ganze Zahl 1, 2, 3, 4, 5, 6, 7, 8, 9 oder 10 bedeutet

und/oder der Formel

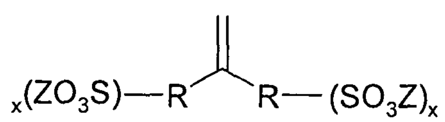

worin

R eine Bindung, eine zweibindige C1-C15-Alkylengruppe, zweibindige C1-C15-Alkylenoxygruppe, beispielsweise eine Ethylenoxygruppe, oder eine zweibindige C5-C20-Aryl- oder Heteroarylgruppe bedeutet, wobei die vorstehenden Reste ihrerseits mit Halogen, -OH, COOZ, -CN, $NZ_2$ substituiert sein können,

Z unabhängig voneinander Wasserstoff, C1 -C15-Alkylgruppe, C1-C15-Alkoxygruppe, beispielsweise eine Ethylenoxygruppe, oder eine C5-C20-Aryl oder Heteroarylgruppe bedeutet, wobei die vorstehenden Reste ihrerseits mit Halogen, -OH, -CN, substituiert sein können und

x eine ganze Zahl 1, 2, 3, 4, 5, 6, 7, 8, 9 oder 10 bedeutet

und/oder der Formel

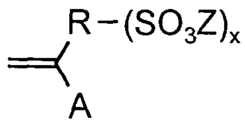

worin

A eine Gruppe der Formeln $COOR^2$, CN, $CONR^2_2$, $OR^2$ und/oder $R^2$ darstellt,

$R^2$ Wasserstoff, eine C1-C15-Alkylgruppe, C1-C15-Alkoxygruppe, beispielsweise eine Ethylenoxygruppe, oder eine C5-C20-Aryl oder Heteroarylgruppe bedeutet, wobei die vorstehenden Reste ihrerseits mit Halogen, -OH, COOZ, - CN, $NZ_2$ substituiert sein können

R eine Bindung, eine zweibindige C1-C15-Alkylengruppe, zweibindige C1-C15-Alkylenoxygruppe, beispielsweise eine Ethylenoxygruppe, oder eine zweibindige C5-C20-Aryl- oder Heteroarylgruppe bedeutet, wobei die vorstehenden Reste ihrerseits mit Halogen, -OH, COOZ, -CN, $NZ_2$ substituiert sein können,

Z unabhängig voneinander Wasserstoff, C1-C15-Alkylgruppe, C1-C15-Alkoxygruppe, beispielsweise eine Ethylenoxygruppe, oder eine C5-C20-Aryl oder Heteroarylgruppe bedeutet, wobei die vorstehenden Reste ihrerseits mit Halogen, -OH, -CN, substituiert sein können und

x eine ganze Zahl 1, 2, 3, 4, 5, 6, 7, 8, 9 oder 10 bedeutet.

Zu den bevorzugten Sulfonsäuregruppen umfassenden Monomeren gehören unter anderem Alkene, die Sulfonsäuregruppen aufweisen, wie Ethensulfonsäure, Propensulfonsäure, Butensulfonsäure; Acrylsäure- und/oder Methacrylsäure-Verbindungen, die Sulfonsäuregruppen aufweisen, wie beispielsweise 2-Sulfonomethyl-acrylsäure, 2-Sulfonomethyl-methacrylsäure, 2-Sulfonomethylacrylsäureamid und 2-Sulfonomethyl-methacrylsäureamid.

Besonders bevorzugt wird handelsübliche Vinylsulfonsäure (Ethensulfonsäure), wie diese beispielsweise von der Firma Aldrich oder Clariant GmbH erhältlich ist, eingesetzt. Eine bevorzugte Vinylsulfonsäure weist eine Reinheit von mehr als 70%, insbesondere 90 % und besonders bevorzugt mehr als 97% Reinheit auf.

Die Sulfonsäuregruppen umfassenden Monomere können des Weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Sulfonsäuregruppen umfassenden Monomere.

Gemäß einem besonderen Aspekt der vorliegenden Erfindung kann das Gewichtsverhältnis von Sulfonsäuregruppen umfassenden Monomeren zu Phosphonsäuregruppen umfassenden Monomeren im Bereich von 100:1 bis 1:100, vorzugsweise 10:1 bis 1:10 und besonders bevorzugt 2:1 bis 1:2 liegen. Gemäß einem weiteren besonderen Aspekt der vorliegenden Erfindung sind die Phosphonsäuregruppen umfassende Monomere gegenüber den Sulfonsäuregruppen umfassenden Monomeren bevorzugt. Dementsprechend wird besonders bevorzugt eine Flüssigkeit eingesetzt, die Phosphonsäuregruppen umfassende Monomere aufweist.

In einer weiteren Ausführungsform der Erfindung können bei der Herstellung der Polymermembran zur Vernetzung befähigte Monomere eingesetzt werden. Diese Monomere können der zur Behandlung der Folie eingesetzten Flüssigkeit beigefügt werden. Darüber hinaus können die zur Vernetzung befähigten Monomere auch auf das flächige Gebilde nach der Behandlung mit der Flüssigkeit aufgebracht werden.

Bei den zur Vernetzung befähigten Monomeren handelt es sich insbesondere um Verbindungen, die mindestens 2 Kohlenstoff-Kohlenstoff Doppelbindungen aufweisen. Bevorzugt werden Diene, Triene, Tetraene, Dimethylacrylate, Trimethylacrylate, Tetramethylacrylate, Diacrylate, Triacrylate, Tetraacrylate.

Besonders bevorzugt sind Diene, Triene, Tetraene der Formel

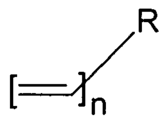

Dimethylacrylate, Trimethylacrylate, Tetramethylacrylate der Formel

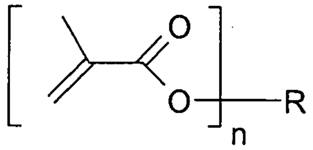

Diacrylate, Triacrylate, Tetraacrylate der Formel

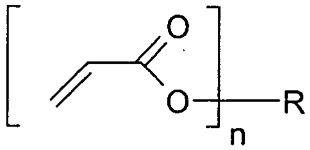

worin

R eine C1-C15-Alkylgruppe, C5-C20-Aryl oder Heteroarylgruppe, NR', $-SO_2$, PR', $Si(R')_2$ bedeutet, wobei die vorstehenden Reste ihrerseits substituiert sein können,

R' unabhängig voneinander Wasserstoff, eine C1-C15-Alkylgruppe, C1-C15-Alkoxygruppe, C5-C20-Aryl oder Heteroarylgruppe bedeutet und

n mindestens 2 ist.

Bei den Substituenten des vorstehenden Restes R handelt es sich vorzugsweise um Halogen-, Hydroxyl-, Carboxy-, Carboxyl-, Carboxylester-, Nitril-, Amin-, Silyl-, Siloxan-Reste.

Besonders bevorzugte Vernetzer sind Allylmethacrylat, Ethylenglykoldimethacrylat, Diethylenglykoldimethacrylat, Triethylenglykoldimethacrylat, Tetra- und Polyethylenglykoldimethacrylat, 1,3-Butandioldimethacrylat, Glycerindimethacrylat, Diurethandimethacrylat, Trimethylpropantrimethacrylat, Epoxyacrylate, beispielsweise Ebacryl, N',N-Methylenbisacrylamid, Carbinol, Butadien, Isopren, Chloropren, Divinylbenzol und/oder Bisphenol-A-dimethylacrylat. Diese Verbindungen sind beispielsweise von Sartomer Company Exton, Pennsylvania unter den Bezeichnungen CN-120, CN104 und CN-980 kommerziell erhältlich.

Der Einsatz von Vernetzern ist optional, wobei diese Verbindungen üblicherweise im Bereich zwischen 0,05 bis 30 Gew.-%, vorzugsweise 0,1 bis 20 Gew.-%, besonders bevorzugt 1 und 10 Gew.-%, bezogen auf das Gewicht der Phosphonsäuregruppen umfassenden Monomere, eingesetzt werden können.

Die Flüssigkeit, die Phosphonsäuregruppen umfassende Monomere und/oder Sulfonsäuregruppen umfassende Monomere enthält, kann eine Lösung darstellen, wobei die Flüssigkeit auch suspendierte und/oder dispergierte Bestandteile enthalten kann. Die Viskosität der Flüssigkeit, die Phosphonsäuregruppen umfassende Monomere und/oder Sulfonsäuregruppen umfassende Monomere enthält, kann in weiten Bereichen liegen, wobei zur Einstellung der Viskosität eine Zugabe von Lösungsmitteln oder eine Temperaturerhöhung erfolgen kann. Vorzugsweise liegt die dynamische Viskosität im Bereich von 0,1 bis 10000 mPa*s, insbesondere 0,2 bis 2000 mPa*s, wobei diese Werte beispielsweise gemäß DIN 53015 gemessen werden können.

Eine Membran, insbesondere eine Membran auf Basis von Polyazolen, kann durch Einwirken von Hitze in Gegenwart von Luftsauerstoff an der Oberfläche noch vernetzt werden. Diese Härtung der Membranoberfläche verbessert die Eigenschaften der Membran zusätzlich. Hierzu kann die Membran auf eine Temperatur von mindestens 150°C, vorzugsweise mindestens 200°C und besonders bevorzugt mindestens 250°C erwärmt werden. Die Sauerstoffkonzentration liegt bei diesem Verfahrensschritt üblicherweise im Bereich von 5 bis 50 Vol.-%, vorzugsweise 10 bis 40 Vol.-%, ohne dass hierdurch eine Beschränkung erfolgen soll.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer

Energie im Bereich von ca. 0.6 bis 1.75 eV) erfolgen. Eine weitere Methode ist die Bestrahlung mit β-Strahlen. Die Strahlungsdosis beträgt hierbei zwischen 5 und 200 kGy.

Je nach gewünschtem Vernetzungsgrad kann die Dauer der Vernetzungsreaktion in einem weiten Bereich liegen. Im Allgemeinen liegt diese Reaktionszeit im Bereich von 1 Sekunde bis 10 Stunden, vorzugsweise 1 Minute bis 1 Stunde, ohne dass hierdurch eine Beschränkung erfolgen soll.

Erfindungsgemäß umfasst die Membran-Elektroden-Einheit mindestens zwei elektrochemisch aktive Elektroden (Anode und Kathode), die durch die Polymer-Elektrolyt-Membran getrennt sind. Der Begriff "elektrochemisch aktiv" weist darauf hin, dass die Elektroden in der Lage sind, die Oxidation von Wasserstoff und/oder zumindest einem Reformat und die Reduktion von Sauerstoff zu katalysieren. Diese Eigenschaft durch Beschichtung der Elektroden mit Platin und/oder Ruthenium erhalten werden. Der Begriff "Elektrode" bedeutet, dass das Material elektrisch leitfähig ist. Die Elektrode kann ggf. eine Edelmetallschicht aufweisen. Derartige Elektroden sind bekannt und werden beispielsweise in US 4,191,618, US 4,212,714 und US 4,333,805 beschrieben.

Die Elektroden umfassen vorzugsweise Gasdiffusionsschichten, die mit einer Katalysatorschicht in Kontakt stehen.

Als Gasdiffusionsschichten werden üblicherweise flächige, elektrisch leitende und säureresistente Gebilde eingesetzt. Zu diesen gehören beispielsweise Graphitfaser-Papiere, Kohlefaser-Papiere, Graphitgewebe und/oder Papiere, die durch Zugabe von Ruß leitfähig gemacht wurden. Durch diese Schichten wird eine feine Verteilung der Gas- und/oder Flüssigkeitsströme erzielt.

Ferner können auch Gasdiffusionsschichten eingesetzt werden, welche ein mechanisch stabiles Stützmaterial enthalten, das mit mindestens einem elektrisch leitfähigen Material, z. B. Kohlenstoff (beispielsweise Ruß), imprägniert ist. Für diese Zwecke besonders geeignete Stützmaterialien umfassen Fasern, beispielsweise in Form von Vliesen, Papieren oder Geweben, insbesondere Kohlefasern, Glasfasern oder Fasern enthaltend organische Polymere, beispielsweise Polypropylen, Polyester (Polyethylenterephthalat), Polyphenylensulfid oder Polyetherketone. Weitere Details zu derartigen Diffusionsschichten können beispielsweise der WO 9720358 entnommen werden.

Die Gasdiffusionsschichten weisen vorzugsweise eine Dicke im Bereich von 80 μm bis 2000 μm, insbesondere im Bereich von 100 μm bis 1000 μm und besonders bevorzugt im Bereich von 150 μm bis 500 μm, auf.

Weiterhin besitzen die Gasdiffusionsschichten günstigerweise eine hohe Porosität auf. Diese liegt vorzugsweise im Bereich von 20 % bis 80%.

Die Gasdiffusionsschichten können übliche Additive enthalten. Hierzu gehören unter anderem Fluorpolymere, wie z.B. Polytetrafluorethylen (PTFE) und oberflächenaktive Substanzen.

Gemäß einer besonderen Ausführungsform kann mindestens eine der Gasdiffusionsschichten aus einem kompressiblen Material bestehen. Im Rahmen der vorliegenden Erfindung ist ein kompressibles Material durch die Eigenschaft gekennzeichnet, dass die Gasdiffusionsschicht ohne Verlust ihrer Integrität durch Druck auf die Hälfte, insbesondere auf ein Drittel ihrer ursprünglichen Dicke gepresst werden kann.

Diese Eigenschaft weisen im Allgemeinen Gasdiffusionsschichten aus Graphitgewebe und/oder Papier, das durch Zugabe von Ruß leitfähig gemacht wurde, auf.

Die katalytisch aktive Schicht enthält eine katalytisch aktive Substanz. Zu diesen gehören unter anderem Edelmetalle, insbesondere Platin, Palladium, Rhodium, Iridium und/oder Ruthenium. Diese Substanzen können auch in Form von Legierungen untereinander eingesetzt werden. Des Weiteren können diese Substanzen auch in Legierung mit unedlen Metallen, wie beispielsweise Cr, Zr, Ni, Co und/oder Ti verwendet werden. Darüber hinaus können auch die Oxide der zuvor genannten Edelmetalle und/oder unedlen Metalle eingesetzt werden. Üblicherweise werden die oben genannten Metalle nach bekannten Methoden auf einem Trägermaterial, meist Kohlenstoff mit hoher spezifischer Oberfläche, in Form von Nanopartikeln eingesetzt.

Gemäß einem besonderen Aspekt der vorliegenden Erfindung werden die katalytisch aktiven Verbindungen, d. h. die Katalysatoren, in Form von Partikeln eingesetzt, die vorzugsweise eine Größe im Bereich von 1 bis 1000 nm, insbesondere 5 bis 200 nm und bevorzugt 10 bis 100 nm, aufweisen.

Gemäß einer besonderen Ausführungsform der vorliegenden Erfindung ist das Gewichtsverhältnis von Fluorpolymer zu Katalysatormaterial, umfassend mindestens ein Edelmetall und gegebenenfalls ein oder mehrere Trägermaterialien, größer als 0,1, wobei dieses Verhältnis vorzugsweise im Bereich von 0,2 bis 0,6 liegt.

Gemäß einer besonderen Ausführungsform der vorliegenden Erfindung weist die Katalysatorschicht eine Dicke im Bereich von 1 bis 1000 μm, insbesondere von 5 bis 500 μm, vorzugsweise von 10 bis 300 μm, auf. Dieser Wert stellt einen Mittelwert dar, der durch Messung der Schichtdicke im Querschnitt von Aufnahmen bestimmt werden kann, die mit einem Rasterelektronenmikroskop (REM) erhalten werden können.

Nach einer besonderen Ausführungsform der vorliegenden Erfindung beträgt der Edelmetallgehalt der Katalysatorschicht 0,1 bis 10,0 mg/cm$^2$, vorzugsweise 0,3 bis 6,0 mg/cm$^2$ und besonders bevorzugt 0,3 bis 3,0 mg/cm$^2$. Diese Werte können durch Elementaranalyse einer flächigen Probe bestimmt werden.

Die Katalysatorschicht ist im Allgemeinen nicht selbsttragend, sondern wird üblicherweise auf die Gasdiffusionsschicht und/oder die Membran aufgebracht. Hierbei kann ein Teil der Katalysatorschicht beispielsweise in die Gasdiffusionsschicht und/oder die Membran diffundieren, wodurch sich Übergangsschichten bilden. Dies kann auch dazuführen, dass die Katalysatorschicht als Teil der Gasdiffusionsschicht aufgefasst werden kann.

Erfindungsgemäß stehen die Oberflächen der Polymer-Elektrolyt-Membran derart mit den Elektroden in Kontakt, dass die erste Elektrode die Vorderseite der Polymer-Elektrolyt-Membran und die zweite Elektrode die Rückseite der Polymer-Elektrolyt-Membran jeweils teilweise oder vollständig, vorzugsweise nur teilweise, bedeckt. Hierbei bezeichnen die Vorder- und die Rückseite der Polymer-Elektrolyt-Membran die dem Betrachter zugewandte bzw. abgewandte Seite der Polymer-Elektrolyt-Membran, wobei eine Betrachtung ausgehend von der ersten Elektrode (vorne), vorzugsweise der Kathode, in Richtung der zweiten Elektrode (hinten), vorzugsweise der Anode, erfolgt.

Zweckmäßigerweise umfasst die Polymer-Elektrolyt-Membran einen inneren und einen äußeren Bereich, wobei nur die Vorder- und die Rückseite des inneren Bereiches der Polymer-Elektrolyt-Membran mit den Elektroden in Kontakt stehen. Gemäß dieser Ausführungsform bedeckt die erste Elektrode zumindest teilweise die Vorderseite des inneren Bereichs der Polymer-Elektrolyt-Membran und die zweite Elektrode bedeckt zumindest teilweise die Rückseite des inneren Bereichs der Polymer-Elektrolyt-Membran, falls eine Betrachtung senkrecht zur Oberfläche der Polymer-Elektrolyt-Membran erfolgt. Der äußere Bereich wird hingegen nicht durch die Elektroden bedeckt, falls eine Betrachtung senkrecht zur Oberfläche der Polymer-Elektrolyt-Membran vorgenommen wird.

Für weitere Informationen über Membran-Elektroden-Einheiten wird auf die Fachliteratur, insbesondere auf die Patentanmeldungen WO 01/18894 A2, DE 195 09 748, DE 195 09 749, WO 00/26982, WO 92/15121 und DE 197 57 492 verwiesen. Die in den vorstehend genannten Literaturstellen enthaltene Offenbarung hinsichtlich des Aufbaues und der Herstellung von Membran-Elektroden-Einheiten, sowie der zu wählenden Elektroden, Gasdiffusionslagen und Katalysatoren ist auch Bestandteil der Beschreibung.

Gemäß der vorliegenden Erfindung umfasst die Membran-Elektroden-Einheit Dichtungsmaterial auf der Vorder- und der Rückseite der Polymer-Elektrolyt-Membran. Dabei kann das Dichtungsmaterial ggf. die Elektroden teilweise bedecken. Zweckmäßigerweise ist dies jedoch nicht der Fall und das Dichtungsmaterial befindet sich auf nicht durch die Elektroden abgedeckten Oberflächen der Vorder- und der Rückseite der Polymer-Elektrolyt-Membran.

Für die Zwecke der vorliegenden Erfindung geeignete Dichtungsmaterialien sind dem Fachmann bekannt. Sie umfassen insbesondere solche Materialien, die eine Dauergebrauchstemperatur von mindestens 190°C, bevorzugt mindestens 220°C und besonders bevorzugt mindestens 250°C, gemessen nach MIL-P-46112B, Paragraph 4.4.5, besitzen.

Gemäß einem besonderen Aspekt der vorliegenden Erfindung werden Dichtungsmaterialien verwendet, die durch thermoplastische Verfahren, vorzugsweise Spritzguss, aufgebracht werden können. Daher werden vorzugsweise schmelzbare Polymere als Dichtungsmaterialien eingesetzt. Zu den besonders bevorzugten schmelzbaren Polymeren gehören Fluorpolymere, insbesondere Poly(tetrafluorethylen-co-hexafluorpropylen) FEP, Polyvinylidenfluorid PVDF, Perfluoralkoxypolymer PFA, Poly(tetrafluorethylen-co-perfluoro(methylvinylether)) MFA, Dipolymere von Vinylidenfluorid (VF2)/Hexafluoropropylen (HFP), Terpolymere von Vinylidenfluorid (VF2)/Hexafluoropropylen (HFP)/Tetrafluoroethylen (TFE), Copolymere von Tetrafluoroethylen (TFE)/Propylen (PP) und Ethylen(E)/Tetrafluoroethylen (TFE)/Polyperfluoro(methylvinylether) (PMVE), Polyketone, Polyetherketone (PEK), Polyetheretherketone (PEEK), Polyetheretherketonketone (PEEKK), Polyethersulfone (PES), Polysulfone (PSU), Polyphenylensulfone (PPSU), Polyphenylensulfide (PPS), Polyphenylenoxide (PPO), flüssigkristalline Polymere (LCP), Polyimide (PI), Polyetherimide (PEI), Polyamidimide (PAI), Polyphenylenchinoxaline. Diese Polymere sind vielfach kommerziell beispielsweise unter den Handelsbezeichnungen Hostafon®, Hyflon®, Teflon®, Dyneon®, Nowoflon®, Viton®, Kadel®, LITE® K, Arlon®, Gatone®, Vitrex®, Imidex®, Vespel®, Fortron®, Ryton®, Tecetron®, Xydar®, Gafone®, Tecason® und Ketron® erhältlich.

Fluorpolymere werden im Rahmen der vorliegenden Erfindung als Dichtungsmaterialien ganz besonders bevorzugt.

Gemäß der vorliegenden Erfindung weist die Polymer-Elektrolyt-Membran eine oder mehrere Aussparungen auf, wobei das Dichtungsmaterial auf der Vorderseite der Polymer-Elektrolyt-Membran mit dem Dichtungsmaterial auf der Rückseite der Polymer-Elektrolyt-Membran, vorzugsweise durch die mindestens eine Aussparung, in Kontakt steht.

Zweckmäßigerweise umfasst die Polymer-Elektrolyt-Membran eine oder mehrere, teilweise oder vollständig mit Dichtungsmaterial gefüllte Aussparungen, wobei das Dichtungsmaterial in der mindestens einen Aussparung das Dichtungsmaterial auf der Vorderseite der Polymer-Elektrolyt-Membran mit dem Dichtungsmaterial auf der Rückseite der Polymer-Elektrolyt-Membran, vorzugsweise einstückig, verbindet. Der Begriff "einstückig" bedeutet in diesem Zusammenhang, dass das gesamte Dichtungsmaterial miteinander verbunden ist und dementsprechend nur eine einzige Dichtung darstellt, welche, falls überhaupt, nur vollständig ohne Zerstörung der Dichtung entfernt werden kann.

Form und Größe und Anzahl der Aussparungen können prinzipiell beliebig gewählt werden. Die Form der Aussparungen kann beispielsweise halbrund, rund, oval, eckig, sternförmig sein. Weiterhin kann die Polymer-Elektrolyt-Membran beispielsweise viele, vergleichsweise kleine Aussparungen oder wenige, vergleichsweise große Aussparungen aufweisen. Es hat sich jedoch als günstig erwiesen, dass die mindestens eine Aussparung als Kanal ausgebildet ist, welcher vorzugsweise senkrecht zur Oberfläche der Polymer-Elektrolyt-Membran verläuft, d. h. in Blickrichtung, wenn die Betrachtung ausgehend von der ersten Elektrode (vorne), vorzugsweise der Kathode, in Richtung der zweiten

Elektrode (hinten), vorzugsweise der Anode, erfolgt.

Weiterhin weist die mindestens eine Aussparung vorzugsweise die Form eines Loches auf, wobei die Vorder- und die Rückseite des Loches vorzugsweise vollständig mit Dichtungsmaterial bedeckt sind. Die Form der Löcher kann prinzipiell beliebig gewählt werden. Sie kann beispielsweise rund, oval, eckig oder sternförmig sein.

Günstigerweise ist die mindestens eine Aussparung im äußeren Bereich der Polymer-Elektrolyt-Membran angeordnet.

Weiterhin kann ein bessere Dichtigkeit dadurch erzielt werden, dass man in regelmäßigen Abständen Aussparungen in der Polymer-Elektrolyt-Membran vorsieht, damit das Dichtungsmaterial abdichtend an der Vorder- und der Rückseite der Polymer-Elektrolyt-Membran anliegt. Hierbei ist eine gute Adhäsion des Dichtungsmaterials an der Oberfläche der Polymer-Elektrolyt-Membran nicht unbedingt erforderlich.

Das Dichtungsmaterial soll beim Betrieb der Membran-Elektroden-Einheit die Brennstoffzelle abdichten, um so ein Entweichen von Reaktionsfluiden und/oder Lösungsmitteln aus der Brennstoffzelle bestmöglich zu vermeiden. Zu diesem Zweck steht das Dichtungsmaterial auf der Vorder- und/oder der Rückseite der Polymer-Elektrolyt-Membran, vorzugsweise auf der Vorder- und der Rückseite der Polymer-Elektrolyt-Membran, mit elektrisch-leitenden Bipolarplatten in Kontakt, die typischerweise mit Strömungsfeldrinnen auf den den Elektroden zugewandten Seiten versehen sind, um die Verteilung von Reaktantenfluiden zu ermöglichen. Die Bipolarplatten werden üblicherweise aus Graphit oder aus leitfähigem, wärmebeständigem Kunststoff gefertigt.

Im Zusammenspiel mit den Bipolarplatten dichtet das Dichtungsmaterial die Gasräume im Allgemeinen nach außen ab. Darüber hinaus dichtet das Dichtungsmaterial im Allgemeinen auch die Gasräume zwischen Anode und Kathode ab. Überraschend wurde somit gefunden, dass ein verbessertes Dichtungskonzept zu einer Brennstoffzelle mit einer verlängerten Lebensdauer führen kann.

Aus diesem Grund ist das Dichtungsmaterial vorzugsweise derart ausgebildet, dass mindestens eine, vorzugsweise zwei, Bipolarplatten abdichtend an die die erfindungsgemäße Membran-Elektroden-Einheit angelegt werden können. Die abdichtende Wirkung kann dabei durch Verpressen des Verbundes aus Bipolarplatte(n) und erfindungsgemäßer Membran-Elektroden-Einheit gesteigert werden.

Zur weiteren Verbesserung der abdichtenden Wirkung ist die Kontaktfläche des Dichtungsmaterials auf der Vorderseite der Polymer-Elektrolyt-Membran mit dem Dichtungsmaterial auf der Rückseite der Polymer-Elektrolyt-Membran, bezogen auf die Gesamtoberfläche der mindestens einen Aussparung möglichst groß. Sie liegt günstigerweise im Bereich von 25,0 % und 100,0 %, vorzugsweise im Bereich von 50,0 % und 100,0 %, insbesondere im Bereich von 75,0 % und 100,0 %, jeweils bezogen auf die Gesamtoberfläche der mindestens einen Aussparung. Dabei bezeichnet die Kontaktfläche die Fläche, über die das Dichtungsmaterial auf der Vorderseite der Polymer-Elektrolyt-Membran mit dem Dichtungsmaterial auf der Rückseite der Polymer-Elektrolyt-Membran in Kontakt steht. Die Oberfläche einer Aussparung wird senkrecht zur Oberfläche der Polymer-Elektrolyt-Membran ermittelt. Sollten sich die Oberflächen einer Aussparung auf der Vorder- und auf der Rückseite unterscheiden, so wie der kleinere Wert vorliegend zugrundegelegt.

Gemäß einem weiteren Aspekt der vorliegenden Erfindung hat es sich als überaus günstig erwiesen, dass die Kontaktfläche des Dichtungsmaterials auf der Vorderseite der Polymer-Elektrolyt-Membran und des Dichtungsmaterials auf der Rückseite der Polymer-Elektrolyt-Membran im Inneren ein Loch aufweist. Durch dieses Loch können beispielsweise Gase durch die Membran-Elektroden-Einheit geleitet werden, ohne die Funktionsfähigkeit der Membran-Elektroden-Einheit zu beeinträchtigen.

Die folgenden Figuren dienen zur weiteren Veranschaulichung der vorliegenden Erfindung ohne das hierdurch eine Beschränkung des Erfindungsgedankens erfolgen soll.

Es zeigen:

Fig. 1 eine perspektivische Explosionsdarstellung einer bevorzugten Ausführungsform der erfindungsgemäßen Membran-Elektroden-Einheit

Fig. 2 eine Draufsicht auf eine bevorzugte Ausführungsform einer erfindungsgemäßen Membran-Elektroden-Einheit

Fig. 3 eine erste Seitendarstellung einer bevorzugten Ausführungsform der erfindungsgemäßen Membran-Elektroden-Einheit als Explosionsquerschnitt

Fig. 4 eine zweite Seitendarstellung einer bevorzugten Ausführungsform der erfindungsgemäßen Membran-Elektroden-Einheit als Querschnitt

Fig. 5 eine dritte Seitendarstellung einer bevorzugten Ausführungsform der erfindungsgemäßen Membran-Elektroden-Einheit als Explosionsquerschnitt

Fig. 6 eine vierte Seitendarstellung einer bevorzugten Ausführungsform der erfindungsgemäßen Membran-Elektroden-Einheit als Querschnitt

Die in Fig. 1 gezeigte bevorzugte Ausführungsform der vorliegenden Erfindung umfasst zwei elektrochemisch aktive Elektroden (1, 3), die durch eine Polymer-Elektrolyt-Membran (5) getrennt werden. Die Oberflächen der Polymer-Elektrolyt-Membran stehen derart mit den Elektroden (1, 3) in Kontakt, dass die erste Elektrode (1) die Vorderseite

(sichtbare Fläche) der Polymer-Elektrolyt-Membran (5) und die zweite Elektrode (3) die Rückseite (nicht sichtbar) der Polymer-Elektrolyt-Membran (5) jeweils nur teilweise bedecken.

Im Folgenden wird der durch die Elektroden (1, 3) bedeckte Bereich der Vorder- und der Rückseite als innerer Bereich der Polymer-Elektrolyt-Membran (5) und der nicht durch die Elektroden bedeckte Bereich der Polymer-Elektrolyt-Membran (5) als äußerer Bereich bezeichnet.

Die Membran-Elektroden-Einheit umfasst weiterhin Dichtungsmaterial (7, 9) auf nicht abgedeckten Oberflächen der Vorder- und der Rückseite der Polymer-Elektrolytmembran (5), wobei das Dichtungsmaterial (7) die Vorderseite des äußeren Bereichs der Polymer-Elektrolyt-Membran (5) und das Dichtungsmaterial (9) die Rückseite des äußeren Bereichs der Polymer-Elektrolyt-Membran (5) bedeckt.

Die Polymer-Elektrolyt-Membran (5) umfasst mehrere Aussparungen (11), die vorliegend in der Form von Löchern ausgebildet sind und in gleichmäßigen Abständen im äußeren Bereich angeordnet sind.

Das Dichtungsmaterial (9) auf der Rückseite der Polymer-Elektrolyt-Membran (5) weist auf seiner Vorderseite, d. h. auf der der Polymer-Elektrolyt-Membran (5) zugewandten Seite mehrere vorspringende Ansätze (13) auf, die ebenfalls aus Dichtungsmaterial bestehen. Die Form, Position und Anordnung der vorspringenden Ansätze (13) auf dem Dichtungsmaterial (9) ist dabei derart, dass die vorspringenden Ansätze (13) durch die Aussparungen (11) in der Polymer-Elektrolyt-Membran (5) passen und somit in der Lage sind, das Dichtungsmaterial (9) auf der Rückseite der Polymer-Elektrolyt-Membran (5) mit dem Dichtungsmaterial (7) auf der Vorderseite der Polymer-Elektrolyt-Membran (5) durch die Aussparungen (11) zu verbinden. Die vorspringenden Ansätze (13) weisen daher in der Draufsicht eine Grundfläche kleiner oder gleich der Grundfläche der Aussparungen (11) auf. Weiterhin ist die Höhe der vorspringenden Ansätze (13) mindestens gleich der Dicke (senkrecht) der Polymer-Elektrolyt-Membran (5), damit die vorspringenden Ansätze das Dichtungsmaterial (7, 9) auf beiden Seiten der Polymer-Elektrolyt-Mambran (5) miteinander verbinden können. Darüber hinaus entspricht die Anordnung der vorspringenden Ansätze (13) auf der Vorderseite des Dichtungsmaterials (9) der Anordnung der Aussparungen (11) in der Polymer-Elektrolyt-Membran (5).

Fig. 2 zeigt die Membran-Elektroden-Einheit nochmals in der Draufsicht. Die Vorderseite der Polymer-Elektrolyt-Membran (5) wird durch die erste Elektrode (1) bedeckt. Die zweite Elektrode (3; nicht gezeigt) befindet sich symmetrisch zur Polymer-Elektrolyt-Membran (5) auf ihrer Rückseite. Somit stellt die durch die erste Elektrode (1) bedeckte Oberfläche der Polymer-Elektrolyt-Membran (5) den inneren Bereich der Polymer-Elektrolyt-Membran (5) und die nicht durch die erste Elektrode (1) bedeckte Oberfläche der Polymer-Elektrolyt-Membran (5) den äußeren Bereich der Polymer-Elektrolyt-Membran (5) dar.

Die Aussparungen (11) in der Polymer-Elektrolyt-Membran (5), welche im äußeren Bereich ringförmig um die erste Elektrode (1) angeordnet und in der Form von gleichmäßig angeordneten Löchern ausgebildet sind, werden durch das Dichtungsmaterial (7) bedeckt.

Dabei ist das Dichtungsmaterial (7) vorzugsweise derart auf der Vorderseite der Polymer-Elektrolyt-Membran (5) aufgebracht, dass es an keiner Stelle mit der Elektrode (1) in Kontakt steht. Der Spalt zwischen der Elektrode (1) und dem Dichtungsmaterial (7) dient dazu, den Aufbau mechanischer Spannungen beim Erwärmen, welche sich aufgrund ggf. unterschiedlicher thermischer Ausdehnungskoeffizienten von Elektrode und Dichtungsmaterial ggf. aufbauen können, bestmöglich zu vermeiden.

Auch wenn in Fig. 2 nicht zu sehen, ist aus den gleichen Gründen das Dichtungsmaterial (9) vorzugsweise derart auf der Rückseite der Polymer-Elektrolyt-Membran (5) aufgebracht, dass es an keiner Stelle mit der Elektrode (3) in Kontakt steht.

Die Fig. 3 (Explosionsdarstellung) und 4 zeigen Querschnitte durch die Membran-Elektroden-Einheit, wobei der Schnitt senkrecht zur Oberfläche der Polymer-Elektrolyt-Membran (5) entlang einer Ebene A erfolgte, welche den inneren und den äußeren Bereich der Polymer-Elektrolyt-Membran (5), jedoch keine Aussparungen (11) in der Polymer-Elektrolyt-Membran (5) schneidet. Der Verlauf der Ebene A wird in der Fig. 2 veranschaulicht.

In Fig. 3 weist das Dichtungsmaterial (7, 9) ober- und unterhalb der Polymer-Elektrolyt-Membran (5) dementsprechend in der Mitte Aussparungen auf, die die Elektroden (1, 3) aufnehmen können. Weiterhin sind das Dichtungsmaterial (7', 9') und die vorspringenden Ansätze (13') zu erkennen, welches sich hinter Zeichenebene befinden (nicht schraffierte Elemente).

Beim Zusammenbau nimmt die Aussparung in dem Dichtungsmaterial (7) auf der Vorderseite der Polymer-Elektrolyt-Membran (5) die erste Elektrode (1) und die Aussparung in dem Dichtungsmaterial (9) auf der Rückseite der Polymer-Elektrolyt-Membran (5) die zweite Elektrode (3) auf. Die sich hinter der Zeichenebene befindenden Elemente (7', 9', 13') werden weitestgehend durch die Elektroden (1, 3) sowie das Dichtungsmaterial (7) verdeckt. Lediglich in den Bereichen zwischen der ersten Elektrode (1) und dem Dichtungsmaterial (7) sowie zwischen der zweite Elektrode (3) und dem Dichtungsmaterial (9) ist sich hinter der Zeichenebene befindliches Dichtungsmaterial (7', 9') zu erkennen.

Die Fig. 5 (Explosionsdarstellung) und 6 zeigen Querschnitte durch die Membran-Elektroden-Einheit, wobei der Schnitt senkrecht zur Oberfläche der Polymer-Elektrolyt-Membran (5) entlang einer Ebene B erfolgte, welche den inneren und den äußeren Bereich der Polymer-Elektrolyt-Membran (5) und zwei Aussparungen (11) in der Polymer-Elektrolyt-Membran (5) schneidet, die, entlang der Ebene B betrachtet, durch den inneren Bereich voneinander getrennt

sind. Der Verlauf der Ebene B wird in der Fig. 2 veranschaulicht.

In Fig. 5 weist das Dichtungsmaterial (7, 9) ober- und unterhalb der Polymer-Elektrolyt-Membran (5) dementsprechend in der Mitte Aussparungen auf, die die Elektroden (1, 3) aufnehmen können. Dabei weist das Dichtungsmaterial (9) vorspringende Ansätze (13) und die Polymer-Elektrolyt-Membran (5) Aussparungen (11) auf, die vorspringende Ansätze (13) aufnehmen können. Ferner ist das Dichtungsmaterial (7', 9') zu erkennen, welches sich hinter Zeichenebene befinden (nicht schraffierte Elemente).

Beim Zusammenbau nimmt die Aussparung in dem Dichtungsmaterial (7) auf der Vorderseite der Polymer-Elektrolyt-Membran (5) die erste Elektrode (1) und die Aussparung in dem Dichtungsmaterial (9) auf der Rückseite der Polymer-Elektrolyt-Membran (5) die zweite Elektrode (3) auf. Ferner nehmen die Aussparungen (11) die vorspringenden Ansätze (13) auf, so dass das Dichtungsmaterial (7) auf der Vorderseite der Polymer-Elektrolyt-Membran (5) mit dem Dichtungsmaterial (9) auf der Rückseite der Polymer-Elektrolyt-Membran (5) über die vorspringenden Ansätze (13) einstückig verbunden ist. Die sich hinter der Zeichenebene befindenden Elemente (7', 9') werden weitestgehend durch die Elektroden (1, 3) verdeckt. Lediglich in den Bereichen zwischen der ersten Elektrode (1) und dem Dichtungsmaterial (7) sowie zwischen der zweite Elektrode (3) und dem Dichtungsmaterial (9) ist sich hinter der Zeichenebene befindliches Dichtungsmaterial (7', 9') zu erkennen.

Die Herstellung der erfindungsgemäßen Membran-Elektroden-Einheit ist dem Fachmann offensichtlich. Im Allgemeinen werden die verschiedenen Bestandteile der Membran-Elektroden-Einheit übereinandergelegt und durch Druck und Temperatur miteinander verbunden, wobei üblicherweise bei einer Temperatur im Bereich von 10 bis 300°C, insbesondere 20°C bis 200° und mit einem Druck im Bereich von 1 bis 1000 bar, insbesondere von 3 bis 300 bar, laminiert wird.

Gemäß einer ersten bevorzugten Ausführungsform der Erfindung umfasst die Herstellung der Membran-Elektroden-Einheit die Schritte, dass man

i) die Polymer-Elektrolyt-Membran, vorzugsweise nicht durch die Elektroden abgedeckten Flächen der Polymer-Elektrolyt-Membran, an einer oder mehreren Stellen mit mindestens einer Aussparung versieht,
ii) die mindestens eine Aussparung teilweise oder vollständig mit Dichtungsmaterial füllt und
iii) das Dichtungsmaterial auf nicht durch die Elektroden abgedeckten Flächen

auf der Vorder- und die Rückseite der Polymer-Elektrolyt-Membran aufbringt, wobei die Schritte ii) und iii) derart erfolgen, dass das Dichtungsmaterial in der mindestens einen Aussparung das Dichtungsmaterial auf der Vorderseite der Polymer-Elektrolyt-Membran mit dem Dichtungsmaterial auf der Rückseite der Polymer-Elektrolyt-Membran, vorzugsweise einstückig, verbindet.

Schritt i) kann dabei auf an sich bekannte Weise durchgeführt werden, wobei sich jedoch im vorliegenden Zusammenhang das Schneiden und/oder Stanzen der mindestens einen Aussparung ganz besonders bewährt hat. Weiterhin wird die Polymer-Elektrolyt-Membran vorzugsweise mit Aussparungen senkrecht zur Oberfläche der Polymer-Elektrolyt-Membran versehen.

Auch das Füllen der mindestens einen Aussparung mit Dichtungsmaterial gemäß Schritt ii) und das Aufbringen des Dichtungsmaterials gemäß Schritt iii) kann auf an sich bekannte Weise erfolgen, sofern das Ziel erreicht wird, dass das Dichtungsmaterial in der mindestens einen Aussparung das Dichtungsmaterial auf der Vorderseite der Polymer-Elektrolyt-Membran mit dem Dichtungsmaterial auf der Rückseite der Polymer-Elektrolyt-Membran, vorzugsweise einstückig, verbindet. Daher wird das Dichtungsmaterial vorzugsweise derart auf die Vorder- und die Rückseite der Polymer-Elektrolyt-Membran aufgebracht, dass es das obere und das untere Ende der Aussparung zumindest teilweise, vorzugsweise vollständig bedeckt. Weist die Polymer-Elektrolyt-Membran mehrere Aussparungen auf, so kann es unter Umständen ausreichen, wenn das Dichtungsmaterial der Vorderseite und der Rückseite nur durch einen Teil der Aussparungen miteinander verbunden wird.

Das Aufbringen des Dichtungsmaterials auf die Polymer-Elektrolyt-Membran und das Füllen der mindestens einen Aussparung erfolgt vorzugsweise durch thermoplastische Verfahren im viskoelastischen Zustand, wobei sich für diesen Zweck Spritzguss-Verfahren ganz besonders bewährt haben. Hierbei wird zweckmäßigerweise wie folgt verfahren:

- Zunächst werden Formen für die Vorder- und die Rückseite der Polymer-Elektrolyt-Membran gefertigt, in welchen eine oder mehrere Aussparungen, vorzugsweise nach oben offene Kanäle, für das Dichtungsmaterial vorgesehen werden. Dabei werden die Form, Größe und Position der Aussparungen derart gewählt, dass eine nach Außen bestmöglich abgedichtete Zelle mit der gewünschten Größe der Kontaktfläche von Elektroden und Polymer-Elektrolyt-Membran erhalten wird. Zweckmäßigerweise verhalten sich das Layout der Aussparungen auf den beiden Formen wie Bild und Spiegelbild zueinander.
- Parallel dazu wird eine Membran-Elektroden-Einheit vorbereitet, welche zwei elektrochemisch aktive Elektroden umfasst, die durch eine Polymer-Elektrolyt-Membran getrennt werden, wobei die Oberflächen der Polymer-Elektrolyt-Membran derart mit den Elektroden in Kontakt stehen, dass die erste Elektrode die Vorderseite der Polymer-Elektrolyt-Membran und die zweite Elektrode die Rückseite der Polymer-Elektrolyt-Membran jeweils teilweise oder vollständig, vorzugsweise nur teilweise, bedeckt. Dabei ist die Polymer-Elektrolyt-Membran ferner mit einer oder mehreren Aussparungen versehen, die zweckmäßigerweise nicht durch die Elektroden abgedeckten Oberflächen der Vorder- und der Rückseite der Polymer-Elektrolyt-Membran miteinander verbinden.

- Zur Herstellung der erfindungsgemäßen Membran-Elektroden-Einheit wird:

  a) die mindestens eine vorgesehene Aussparung in der Form der Rückseite mit Dichtungsmaterialschmelze gefüllt,
  b) die zuvor beschriebene Membran-Elektroden-Einheit derart auf die Form gelegt, dass die Dichtungsmaterialschmelze mit der Rückseite der Polymer-Elektrolyt-Membran, vorzugsweise mit nicht durch die Elektrode abgedeckter Oberfläche der Rückseite der Polymer-Elektrolyt-Membran, in Kontakt steht und das untere Ende der mindestens einen Aussparung in der Polymer-Elektrolyt-Membran mit der Dichtungsmaterialschmelze in Kontakt steht,
  c) die mindestens eine Aussparung zumindest teilweise mit Dichtungsmaterialschmelze gefüllt,
  d) die mindestens eine vorgesehene Aussparung in der Form der Vorderseite mit Dichtungsmaterialschmelze gefüllt,
  e) die Form der Vorderseite derart auf die Vorderseite der Polymer-Elektrolyt-Membran gelegt, dass die Dichtungsmaterialschmelze in der Form der Vorderseite mit der Vorderseite der Polymer-Elektrolyt-Membran, vorzugsweise mit nicht durch die Elektrode abgedeckter Oberfläche der Vorderseite der Polymer-Elektrolyt-Membran, in Kontakt steht und das obere Ende der mindestens einen Aussparung in der Polymer-Elektrolyt-Membran mit der Dichtungsmaterialschmelze der Form der Vorderseite in Kontakt steht,
  f) der Verbund aus Form der Rückseite, Membran-Elektroden-Einheit und Form der Vorderseite, vorzugsweise unter Druck, derart abgekühlt, dass die Dichtungsmaterialschmelze erstarrt.

- Die fertige Membran-Elektroden-Einheit (MEA) ist nach dem Abkühlen und Entfernen der Formen betriebsbereit und kann in einer Brennstoffzelle verwendet werden.

Gemäß einer zweiten bevorzugten Ausführungsform der vorliegenden Erfindung zur Herstellung der erfindungsgemäßen Membran-Elektroden-Einheit erfolgt das Aufbringen des Dichtungsmaterials auf die Polymer-Elektrolyt-Membran mittels Extrusionsverfahren. Dabei wird wiederum eine Membran-Elektroden-Einheit vorbereitet, welche zwei elektrochemisch aktive Elektroden umfasst, die durch eine Polymer-Elektrolyt-Membran getrennt werden, wobei die Oberflächen der Polymer-Elektrolyt-Membran derart mit den Elektroden in Kontakt stehen, dass die erste Elektrode die Vorderseite der Polymer-Elektrolyt-Membran und die zweite Elektrode die Rückseite der Polymer-Elektrolyt-Membran jeweils teilweise oder vollständig, vorzugsweise nur teilweise, bedeckt. Die Polymer-Elektrolyt-Membran ist ferner mit einer oder mehreren Aussparungen versehen, die zweckmäßigerweise nicht durch die Elektroden abgedeckten Oberflächen der Vorder- und der Rückseite der Polymer-Elektrolyt-Membran miteinander verbinden.

Zum Aufbringen des Dichtungsmaterials wird dieses vorzugsweise extrudiert und auf die Vorder- und die Rückseite der Polymer-Elektrolyt-Membran derart aufgetragen, dass das Dichtungsmaterial mindestens eine Aussparung von beiden Seiten mindestens teilweise bedeckt. Der Verbund aus Dichtungsmaterial und Membran-Elektroden-Einheit wird dann derart verpresst, dass das Dichtungsmaterial auf der Vorderseite der Polymer-Elektrolyt-Membran mit dem Dichtungsmaterial auf der Rückseite der Polymer-Elektrolyt-Membran in Kontakt steht.

Gemäß einer dritten bevorzugten Ausführungsform der vorliegenden Erfindung umfasst die Herstellung der erfindungsgemäßen Membran-Elektroden-Einheit die Schritte, dass man eine Membran-Elektroden-Einheit vorbereitet, welche zwei elektrochemisch aktive Elektroden umfasst, die durch eine Polymer-Elektrolyt-Membran getrennt werden, wobei die Oberflächen der Polymer-Elektrolyt-Membran derart mit den Elektroden in Kontakt stehen, dass die erste Elektrode die Vorderseite der Polymer-Elektrolyt-Membran und die zweite Elektrode die Rückseite der Polymer-Elektrolyt-Membran jeweils teilweise oder vollständig, vorzugsweise nur teilweise, bedeckt.

Als nächstes bringt man das Dichtungsmaterial auf die Vorder- und die Rückseite der Polymer-Elektrolyt-Membran auf und versieht den Verbund aus Dichtungsmaterial und Membran-Elektroden-Einheit mit mindestens einer Aussparung, vorzugsweise mit mindestens einem Loch, die durch das Dichtungsmaterial auf der Vorder- und der Rückseite der Polymer-Elektrolyt-Membran und durch die Polymer-Elektrolyt-Membran verläuft. Man füllt die mindestens eine Aussparung zumindest teilweise mit Dichtungsmaterial und verbindet auf diese Weise das Dichtungsmaterial auf der Vorderseite der Polymer-Elektrolyt-Membran mit dem Dichtungsmaterial auf der Rückseite der Polymer-Elektrolyt-Membran. Günstigerweise erfolgt das Aufbringen des Dichtungsmaterials simultan mit der Erzeugung der mindestens einen Aussparung, indem man die mindestens eine Aussparung mittels einer innen hohlen Form sticht und beim Entfernen der Form die entstehende mindestens eine Aussparung direkt mit Dichtungsmaterial zumindest teilweise füllt, indem man durch das Innere der Form Dichtungsmaterial in die Aussparung leitet.

Gemäß einer vierten bevorzugten Ausführungsform der vorliegenden Erfindung umfasst die Herstellung der Membran-Elektroden-Einheit die Schritte, dass man eine Membran-Elektroden-Einheit vorbereitet, welche zwei elektrochemisch aktive Elektroden umfasst, die durch eine Polymer-Elektrolyt-Membran getrennt werden, wobei die Oberflächen der Polymer-Elektrolyt-Membran derart mit den Elektroden in Kontakt stehen, dass die erste Elektrode die Vorderseite der Polymer-Elektrolyt-Membran und die zweite Elektrode die Rückseite der Polymer-Elektrolyt-Membran jeweils teilweise oder vollständig, vorzugsweise nur teilweise, bedeckt.

Als nächstes legt man die Polymer-Elektrolyt-Membran in eine geeignete Form, versieht sie mit mindestens einer Aussparung, vorzugsweise mit mindestens einem Loch, und bringt dann Dichtungsmaterial, vorzugsweise mittels Spritzguss-Verfahren, auf die Vorder- und die Rückseite der Polymer-Elektrolyt-Membran auf. Günstigerweise erfolgt das Aufbringen des Dichtungsmaterials simultan mit der Erzeugung der mindestens einen Aussparung, indem man die mindestens eine Aussparung mittels einer innen hohlen Form sticht und beim Entfernen der Form die entstehende mindestens eine Aussparung direkt mit Dichtungsmaterial zumindest teilweise füllt, indem man durch das Innere der Form Dichtungsmaterial in die Aussparung leitet.

Gemäß einer fünften bevorzugten Ausführungsform der vorliegenden Erfindung umfasst die Herstellung der Membran-Elektroden-Einheit die Schritte, dass man eine Membran-Elektroden-Einheit vorbereitet, welche zwei elektrochemisch aktive Elektroden umfasst, die durch eine Polymer-Elektrolyt-Membran getrennt werden, wobei die Oberflächen der Polymer-Elektrolyt-Membran derart mit den Elektroden in Kontakt stehen, dass die erste Elektrode die Vorderseite der Polymer-Elektrolyt-Membran und die zweite Elektrode die Rückseite der Polymer-Elektrolyt-Membran jeweils teilweise oder vollständig, vorzugsweise nur teilweise, bedeckt.

Als nächstes versieht man die Polymer-Elektrolyt-Membran mit mindestens einer Aussparung, vorzugsweise mit mindestens einem Loch, und bringt dann vorgeformtes Dichtungsmaterial auf die Vorder- und die Rückseite der Polymer-Elektrolyt-Membran auf. Dabei weist das auf der Rückseite aufgebrachte Dichtungsmaterial auf seiner der Polymer-Elektrolyt-Membran zugewandten Seite einen oder mehrere vorspringende Ansätze auf, die ebenfalls aus Dichtungsmaterial bestehen. Die Form, Position und Anordnung der vorspringenden Ansätze auf dem Dichtungsmaterial ist dabei derart, dass die vorspringenden Ansätze durch die Aussparungen in der Polymer-Eleketrolyt-Membran passen und somit in der Lage sind, das Dichtungsmaterial auf der Rückseite der Polymer-Elektrolyt-Membran mit dem Dichtungsmaterial auf der Vorderseite der Polymer-Elektrolyt-Membran durch die Aussparungen zu verbinden. Zweckmäßigerweise werden die vorspringenden Ansätze des Dichtungsmaterials auf der Rückseite der Polymer-Elektrolyt-Membran dann in einem weiteren Schritt mit dem Dichtungsmaterial auf der Vorderseite der Polymer-Elektrolyt-Membran, vorzugsweise durch Kunststoffschweißen, verbunden.

Im Rahmen dieser Ausführungsform hat es sich erfindungsgemäß ganz besonders bewährt, dass das Dichtungsmaterial auf der Vorderseite der Polymer-Elektrolyt-Membran eine oder mehrere Aussparungen, vorzugsweise mindestens ein Loch, aufweist, die die vorspringenden Ansätze des Dichtungsmaterials auf der Rückseite der Polymer-Elektrolyt-Membran aufnehmen können. Der Zusammenbau der Membran-Elektrodeneinheit erfolgt dann vorzugsweise derart, dass man die vorspringenden Ansätze des Dichtungsmaterials durch die Polymer-Elektrolyt-Membran und die Aussparungen in dem Dichtungsmaterial auf der Vorderseite der Polymer-Elektrolyt-Membran steckt und das Dichtungsmaterial auf der Vorderseite der Polymer-Elektrolyt-Membran mit den vorspringenden Ansätzen des Dichtungsmaterials auf der Rückseite der Polymer-Elektrolyt-Membran verbindet, vorzugsweise verschweißt.

Besonders überraschend wurde festgestellt, dass erfindungsgemäße Membran-Elektroden-Einheiten aufgrund ihrer Dimensionstabilität bei schwankenden Umgebungstemperaturen und Luftfeuchtigkeit problemlos gelagert oder versendet werden können. Auch nach längerer Lagerung oder nach Versand an Orte mit deutlich unterschiedlichen klimatischen Bedingungen stimmen die Dimensionen der Membran-Elektroden-Einheiten problemlos für den Einbau in Brennstoffzellenstacks. Die Membran-Elektroden-Einheit muss für einen externen Einbau dann vor Ort nicht mehr konditioniert werden, was die Herstellung der Brennstoffzelle vereinfacht und Zeit und Kosten spart.

Ein Vorteil bevorzugter Membran-Eletroden-Einheiten ist, dass sie den Betrieb der Brennstoffzelle bei Temperaturen oberhalb 120 °C ermöglichen. Dies gilt für gasförmige und flüssige Brennstoffe, wie z.B. Wasserstoff enthaltende Gase, die z.B. in einem vorgeschalteten Reformierungsschritt aus Kohlenwasserstoffen hergestellt werden. Als Oxidanz kann dabei z.B. Sauerstoff oder Luft verwendet werden.

Ein weiterer Vorteil bevorzugter Membran-Elektroden-Einheiten ist, dass sie beim Betrieb oberhalb 120 °C auch mit reinen Platinkatalysatoren, d.h. ohne einen weiteren Legierungsbestandteil, eine hohe Toleranz gegen Kohlenmonoxid aufweisen. Bei Temperaturen von 160 °C kann z.B. mehr als 1 % CO im Brenngas enthalten sein, ohne dass dies zu einer merklichen Reduktion der Leistung der Brennstoffzelle führt.

Bevorzugte Membran-Elektroden-Einheiten können in Brennstoffzellen betrieben werden, ohne dass die Brenngase und die Oxidanzien trotz der möglichen hohen Betriebstemperaturen nicht befeuchtet werden müssen. Die Brennstoffzelle arbeitet dennoch stabil und die Membran verliert ihre Leitfähigkeit nicht. Dies vereinfacht das gesamte Brennstoffzellensystem und bringt zusätzliche Kostenersparnisse, da die Führung des Wasserkreislaufs vereinfacht wird. Weiter wird hierdurch auch das Verhalten bei Temperaturen unterhalb 0 °C des Brennstoffzellensystems verbessert.

Bevorzugte Membran-Elektroden-Einheiten erlauben überraschend, dass die Brennstoffzelle problemlos auf

Raumtemperatur und darunter abgekühlt werden kann und danach wieder in Betrieb genommen werden kann, ohne an Leistung zu verlieren. Herkömmliche auf Phosphorsäure basierende Brennstoffzellen müssen dagegen auch beim Abschalten des Brennstoffzellensystems manchmal bei einer Temperatur oberhalb von 80 °C gehalten werden, um eine irreversible Schädigung zu vermeiden.

Des Weiteren zeigen die bevorzugten Membran-Elektroden-Einheiten der vorliegenden Erfindung eine sehr hohe Langzeitstabilität. Es wurde festgestellt, dass eine erfindungsgemäße Brennstoffzelle über lange Zeiten, z.B. mehr als 5000 Stunden, bei Temperaturen von mehr als 120 °C mit trockenen Reaktionsgasen kontinuierlich betrieben werden kann, ohne dass eine merkliche Leistungsdegradation feststellbar ist. Die dabei erzielbaren Leistungsdichten sind auch nach einer derartig langen Zeit sehr hoch.

Hierbei zeigen die erfindungsgemäßen Brennstoffzellen auch nach langer Zeit, beispielsweise mehr als 5000 Stunden, eine hohe Ruhespannung, die nach dieser Zeit vorzugsweise mindestens 2000 mV beträgt. Zur Messung der Ruhespannung wird eine Brennstoffzelle mit einem Wasserstoff-Fluss auf der Anode und einem Luft-Fluss auf der Kathode stromlos betrieben. Die Messung erfolgt, indem die Brennstoffzelle von einem Strom von 0.2 A/cm$^2$ auf den stromlosen Zustand geschaltet wird und dann dort 52 Minuten die Ruhespannung aufgezeichnet wird. Der Wert nach 5 Minuten ist das entsprechende Ruhepotential. Die gemessenen Werte der Ruhespannung gelten für eine Temperatur von 160°C. Darüber hinaus zeigt die Brennstoffzelle nach dieser Zeit vorzugsweise einen geringen Gasdurchtritt (gas-cross-over). Zur Messung des Cross-overs wird die Anodenseite der Brennstoffzelle mit Wasserstoff (5 L/h) betrieben, die Kathode mit Stickstoff (5L/h). Die Anode dient als Referenz- und Gegenelektrode. Die Kathode als Arbeitselektrode. Die Kathode wird auf ein Potential von 0.5 V gesetzt und der durch die Membran diffundierende Wasserstoff an der Kathode massentransport-limitiert oxidiert. Der resultierende Strom ist ein Maß für die Wasserstoff- Permeationsrate. Der Strom ist <3 mA/cm$^2$, bevorzugt <2 mA/cm$^2$, besonders bevorzugt <1mA/cm$^2$ in einer 50 cm$^2$ Zelle. Die gemessenen Werte der $H_2$-cross-over Ruhespannung gelten für eine Temperatur von 160°C.

Darüber hinaus können die erfindungsgemäßen Membran-Elektroden-Einheiten kostengünstig und einfach hergestellt werden.

Für weitere Informationen über Membran-Elektroden-Einheiten wird auf die Fachliteratur, insbesondere auf die Patente US-A-4,191,618, US-A-4,212,714 und US-A-4,333,805 verwiesen. Die in den vorstehend genannten Literaturstellen [US-A-4,191,618, US-A-4,212,714 und US-A-4,333,805] enthaltene Offenbarung hinsichtlich des Aufbaues und der Herstellung von Membran-Elektroden-Einheiten, sowie der zu wählenden Elektroden, Gasdiffusionslagen und Katalysatoren ist auch Bestandteil der Beschreibung.

## Patentansprüche

**1.** Membran-Elektroden-Einheit umfassend

a) zwei elektrochemisch aktive Elektroden (1, 3), die durch eine Polymer-Elektrolyt-Membran (5) getrennt werden, wobei die Oberflächen der Polymer-Elektrolyt-Membran (5) derart mit den Elektroden (1, 3) in Kontakt stehen, dass die erste Elektrode (1) die Vorderseite der Polymer-Elektrolyt-Membran (5) und die zweite Elektrode (3) die Rückseite der Polymer-Elektrolyt-Membran (5) jeweils teilweise oder vollständig bedeckt,
b) Dichtungsmaterial (7, 9) auf der Vorder- und der Rückseite der Polymer-Elektrolyt-Membran (5),

**dadurch gekennzeichnet, dass**
die Polymer-Elektrolyt-Membran (5) eine oder mehrere Aussparungen (11) aufweist und das Dichtungsmaterial (7) auf der Vorderseite der Polymer-Elektrolyt-Membran (5) mit dem Dichtungsmaterial (9) auf der Rückseite der Polymer-Elektrolyt-Membran (5) in Kontakt steht.

**2.** Membran-Elektroden-Einheit gemäß Anspruch 1, **dadurch gekennzeichnet, dass** die mindestens eine Aussparung (11) in der Form eines Lochs durch die Polymer-Elektrolyt-Membran (5) ausgebildet ist.

**3.** Membran-Elektroden-Einheit gemäß Anspruch 1 oder 2, **dadurch gekennzeichnet, dass** die Polymer-Elektrolyt-Membran (5) einen inneren und einen äußeren Bereich umfasst, wobei nur die Vorder- und die Rückseite des inneren Bereiches der Polymer-Elektrolyt-Membran (5) mit den Elektroden (1, 3) in Kontakt stehen.

**4.** Membran-Elektroden-Einheit gemäß Anspruch 3, **dadurch gekennzeichnet, dass** die mindestens eine Aussparung (11) im äußeren Bereich der Polymer-Elektrolyt-Membran (5) angeordnet ist.

**5.** Membran-Elektroden-Einheit gemäß einem oder mehreren der vorhergehenden Ansprüche, **dadurch gekennzeichnet, dass** das Dichtungsmaterial (7, 9) ein thermoplastisch verarbeitbares Material ist.

**6.** Membran-Elektroden-Einheit gemäß einem oder mehreren der vorhergehenden Ansprüche, **dadurch gekennzeichnet, dass** das Dichtungsmaterial (7, 9) ein Fluorpolymer ist.

**7.** Membran-Elektroden-Einheit gemäß einem oder mehreren der vorhergehenden Ansprüche, **dadurch gekennzeichnet, dass** die Polymer-Elektrolyt-Membran (5) Polyazole umfasst.

**8.** Membran-Elektroden-Einheit gemäß einem oder mehreren der vorhergehenden Ansprüche, **dadurch gekennzeichnet, dass** die Polymer-Elektrolyt-Membran (5) mit einer Säure dotiert ist.

**9.** Membran-Elektroden-Einheit gemäß Anspruch 8, **dadurch gekennzeichnet, dass** die Polymer-Elektrolyt-Membran (5) mit Phosphorsäure dotiert ist.

**10.** Membran-Elektroden-Einheit gemäß Anspruch 9, **dadurch gekennzeichnet, dass** die Konzentration der Phosphorsäure mindestens 50% Gew.-% beträgt.

**11.** Membran-Elektroden-Einheit gemäß einem oder mehreren der vorhergehenden Ansprüche, **dadurch gekennzeichnet, dass** die Polymer-Elektrolyt-Membran (5) durch ein Verfahren erhältlich ist, umfassend die Schritte

A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren in Polyphosphorsäure unter Ausbildung einer Lösung und/oder Dispersion,
B) Aufbringen einer Schicht unter Verwendung der Mischung gemäß Schritt A) auf einem Träger oder auf einer Elektrode,
C) Erwärmen des flächigen Gebildes/Schicht erhältlich gemäß Schritt B) unter Inertgas auf Temperaturen von bis zu 350°C, vorzugsweise bis zu 280°C, unter Ausbildung des Polyazol-Polymeren,
D) Behandlung der in Schritt C) gebildeten Membran bis diese selbsttragend ist.

**12.** Membran-Elektroden-Einheit gemäß Anspruch 9, 10 oder 11, **dadurch gekennzeichnet, dass** der Dotierungsgrad zwischen 3 und 50 beträgt.

**13.** Membran-Elektroden-Einheit gemäß einem oder mehreren der vorhergehenden Ansprüche, **dadurch gekennzeichnet, dass** die Polymer-Elektrolyt-Membran (5) Polymere umfasst, die durch Polymerisation von Phosphonsäuregruppen umfassenden Monomeren und/oder Sulfonsäuregruppen umfassenden Monomeren erhältlich sind.

**14.** Membran-Elektroden-Einheit gemäß einem oder mehreren der vorhergehenden Ansprüche, **dadurch gekennzeichnet, dass** mindestens eine der Elektroden (1, 3) aus einem kompressiblen Material ist.

**15.** Verfahren zur Herstellung einer Membran-Elektroden-Einheit gemäß einem oder mehreren der vorhergehenden Ansprüche, wobei man die Komponenten a) und b) der Membran-Elektroden-Einheit in der gewünschten Reihenfolge zusammensetzt, **dadurch gekennzeichnet, dass** man

i) die Polymer-Elektrolyt-Membran (5) an einer oder mehreren Stellen mit mindestens einer Aussparung (11) versieht,
ii) die mindestens eine Aussparung (11) teilweise oder vollständig mit Dichtungsmaterial füllt und
iii) das Dichtungsmaterial (7, 9) auf nicht durch die Elektroden abgedeckten Flächen auf der Vorder- und die Rückseite der Polymer-Elektrolyt-Membran (5) aufbringt,

wobei die Schritte ii) und iii) derart erfolgen, dass das Dichtungsmaterial in der mindestens einen Aussparung (11) das Dichtungsmaterial (7) auf der Vorderseite der Polymer-Elektrolyt-Membran (5) mit dem Dichtungsmaterial (9) auf der Rückseite der Polymer-Elektrolyt-Membran (5) verbindet.

**16.** Verfahren nach Anspruch 15, **dadurch gekennzeichnet, dass** das Füllen der mindestens einen Aussparung (11) mit Dichtungsmaterial und das Aufbringen des Dichtungsmaterial (7, 9) auf die Polymer-Elektrolyt-Membran (5) durch thermoplastische Verarbeitung im viskoelastischen Zustand erfolgt.

**17.** Verfahren nach Anspruch 16, **dadurch gekennzeichnet, dass** man das Dichtungsmaterial mittels Spritzguss-Verfahren auf die Polymer-Elektrolyt-Membran (5) aufbringt.

18. Brennstoffzelle aufweisend mindestens eine Membran-Elektroden-Einheit gemäß einem oder mehreren der Ansprüche 1 bis 14.

Fig. 1

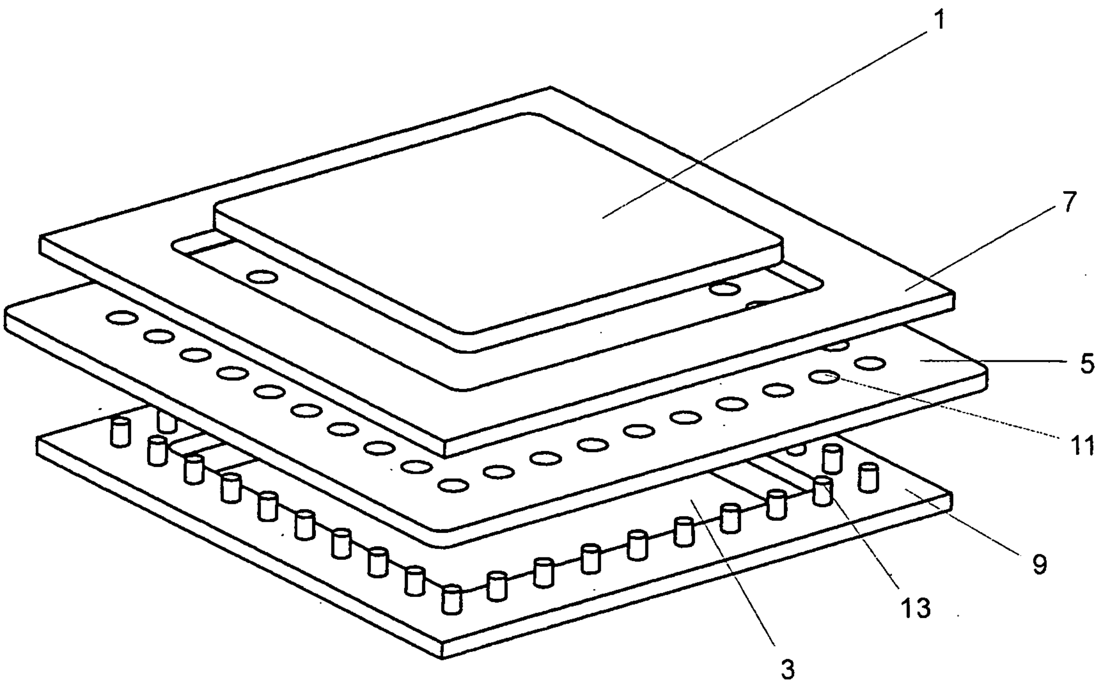


Fig. 2

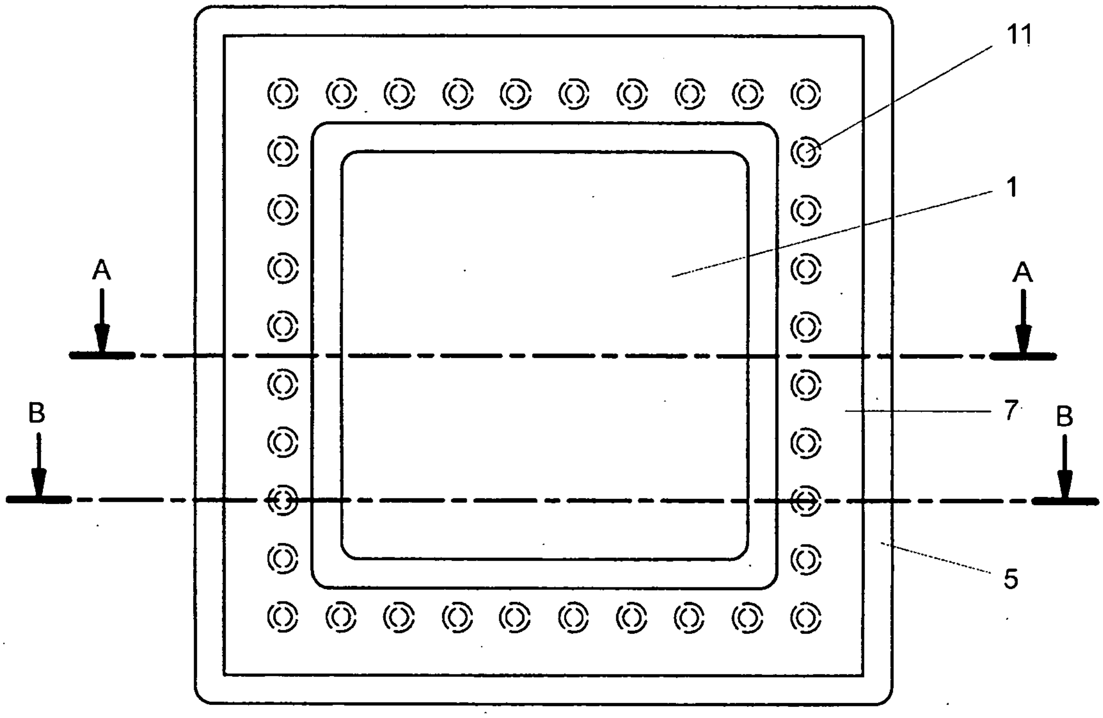

Fig. 3

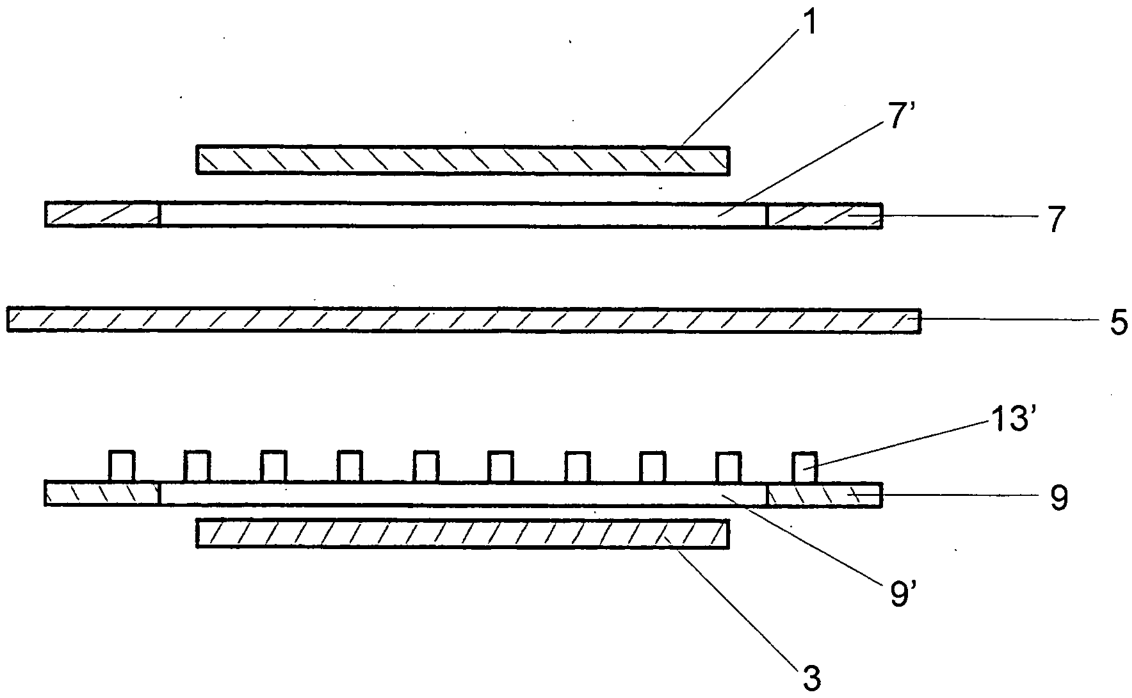


Fig. 4

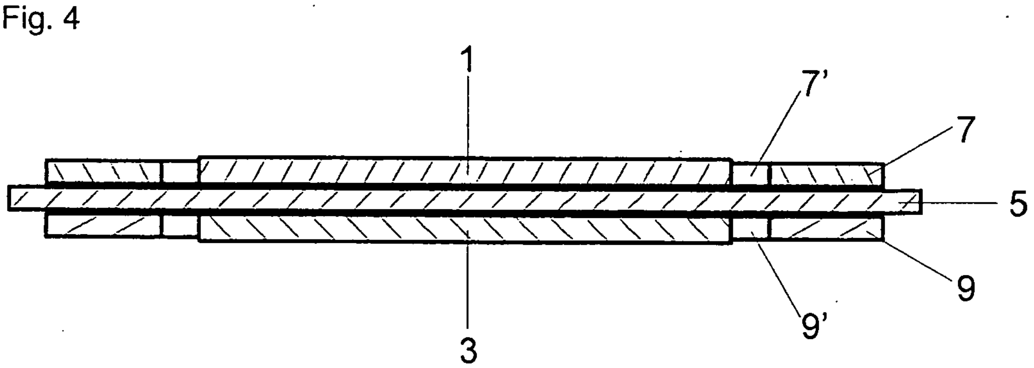

Fig. 5

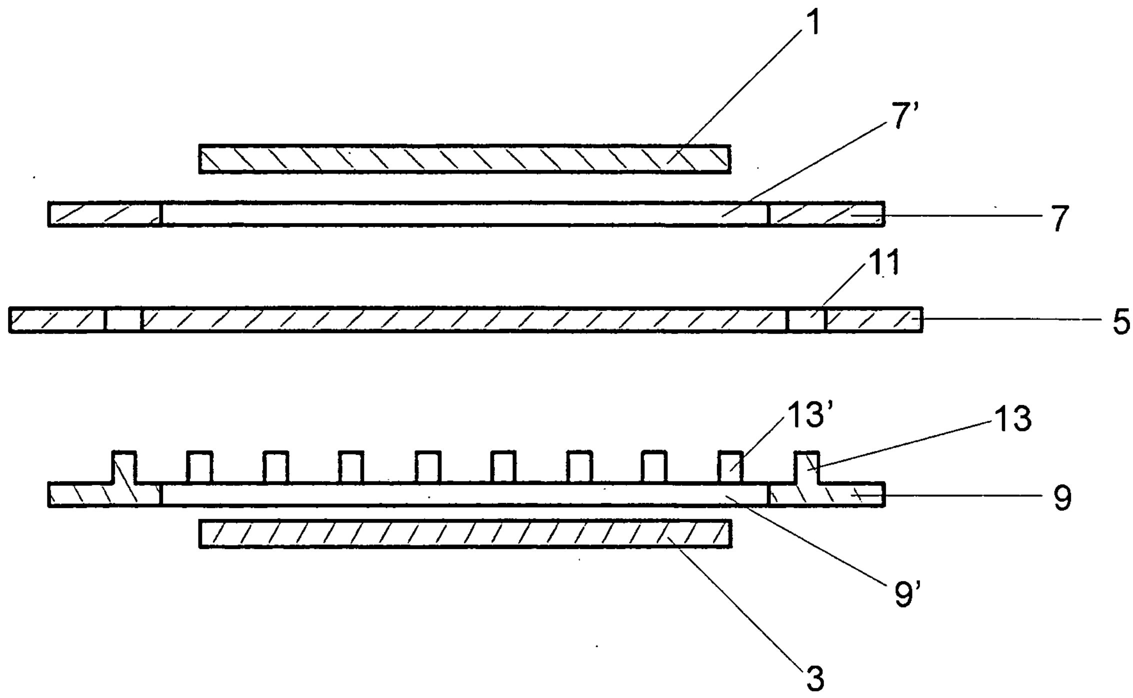


Fig. 6

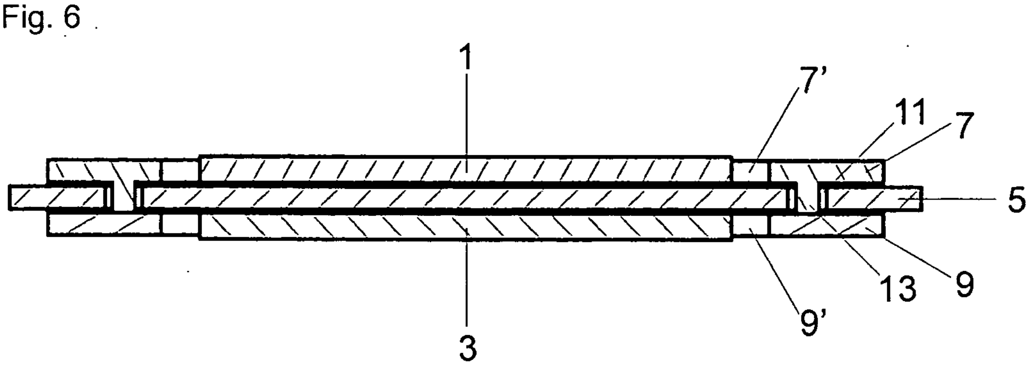

Europäisches Patentamt

# EUROPÄISCHER RECHERCHENBERICHT

Nummer der Anmeldung
EP 04 01 8600

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X<br><br><br><br><br><br><br>Y | EP 1 357 622 A (MATSUSHITA ELECTRIC INDUSTRIAL CO., LTD)<br>29. Oktober 2003 (2003-10-29)<br>* Absätze [0003], [0007], [0016], [0017], [0019], [0024], [0025], [0038], [0041], [0086] *<br>* Ansprüche 1-34 *<br>----- | 1-6,<br>13-18<br><br><br><br><br><br>7-12 | H01M8/02<br>H01M8/10 |
| D,Y | DE 102 46 459 A1 (CELANESE VENTURES GMBH)<br>15. April 2004 (2004-04-15)<br>* das ganze Dokument *<br>----- | 7-12 | |
| X | EP 1 391 956 A (NOK CORPORATION; KABUSHIKI KAISHA TOSHIBA)<br>25. Februar 2004 (2004-02-25)<br>* Absätze [0013] - [0015], [0047], [0048], [0051]; Ansprüche 3-7; Abbildungen 2,4 *<br>----- | 1-6,<br>14-18 | |
| X | EP 1 291 946 A (MATSUSHITA ELECTRIC INDUSTRIAL CO., LTD)<br>12. März 2003 (2003-03-12)<br>* Absatz [0050]; Anspruch 12; Abbildung 11 *<br>----- | 1-4,<br>13-18 | RECHERCHIERTE SACHGEBIETE (Int.Cl.7)<br>H01M |
| A | EP 1 302 996 A (MATSUSHITA ELECTRIC INDUSTRIAL CO., LTD)<br>16. April 2003 (2003-04-16)<br>* das ganze Dokument *<br>----- | 1-18 | |

Der vorliegende Recherchenbericht wurde für alle Patentansprüche erstellt

3

| Recherchenort | Abschlußdatum der Recherche | Prüfer |
|---|---|---|
| Den Haag | 3. Februar 2005 | Reich, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

Nummer der Anmeldung
EP 04 01 8600

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☒ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

Europäisches Patentamt

**MANGELNDE EINHEITLICHKEIT DER ERFINDUNG ERGÄNZUNGSBLATT B**

Nummer der Anmeldung
EP 04 01 8600

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-10,12-18

Membran-Elektroden-Einheit umfassend a) zwei elektrochemisch aktive Elektroden, die durch eine Polymer-Elektrolyt-Membran getrennt werden, wobei die Oberflächen der Polymer-Elektrolyt-Membran derart mit den Elektroden in Kontakt stehen, dass die erste Elektrode die Vorderseite der Polymer-Elektrolyt-Membran und die zweite Elektrode die Rückseite der Polymer-Elektroyt-Membran jeweils teilweise oder vollständig bedeckt, b) Dichtungsmaterial auf der Vorder- und der Rückseite der Polymer-Elektrolyt-Membran,
dadurch gekennzeichnet,
dass die Polymer-Elektrolyt-Membran eine oder mehrere Aussparungen aufweist und das Dichtungsmaterial auf der Vorderseite der Polymer-Elektrolyt-Membran mit dem Dichtungsmaterial auf der Rückseite der Polymer-Elektrolyt-Membran in Kontakt steht; und Verfahren zur Herstellung selbiger Membran-Elektroden-Einheit,
dadurch gekennzeichnet,
dass man i) die Polymer-Elektrolyt-Membran an einer oder mehreren Stellen mit mindestens einer Aussparung versieht, ii) die mindestens eine Aussparung teilweise oder vollständig mit Dichtungsmaterial füllt und iii) das Dichtungsmaterial auf nicht durch die Elektroden abgedeckten Flächen auf der Vorder- und die Rückseite der Polymer-Elektrolyt-Membran aufbringt, wobei die Schritte ii) und iii) derart erfolgen, dass das Dichtungsmaterial in der mindestens einen Aussparung das Dichtungsmaterial auf der Vorderseite der Polymer-Elektrolyt-Membran mit dem Dichtungsmaterial auf der Rückseite der Polymer-Elektrolyt-Membran verbindet.

1.1. Anspruch: 11

Verfahren zur Herstellung einer Polymer-Elektrolyt-Membran, umfassend die Schritte
A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren in Polyphosphorsaure unter Ausbildung einer Lösung und/oder Dispersion, B) Aufbringen einer Schicht unter Verwendung der Mischung gemäß Schritt A) auf einem Träger oder auf einer Elektrode, C) Erwärmen des flächigen Gebildes/Schicht erhältlich gemäß Schritt B) unter lnertgas auf Temperaturen von bis zu 350°C, vorzugsweise bis zu 280°C, unter Ausbildung des Polyazol-Polymeren, D) Behandlung der in Schritt C) gebildeten Membran bis diese selbsttragend ist.

Europäisches Patentamt

**MANGELNDE EINHEITLICHKEIT DER ERFINDUNG ERGÄNZUNGSBLATT B**

Nummer der Anmeldung

EP 04 01 8600

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

---

Bitte zu beachten dass für alle unter Punkt 1 aufgeführten Erfindungen, obwohl diese nicht unbedingt durch ein gemeinsames erfinderisches Konzept verbunden sind, ohne Mehraufwand der eine zusätzliche Recherchengebühr gerechtfertigt hätte, eine vollständige Recherche durchgeführt werden konnte.

## ANHANG ZUM EUROPÄISCHEN RECHERCHENBERICHT ÜBER DIE EUROPÄISCHE PATENTANMELDUNG NR. EP 04 01 8600

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-02-2005

| Im Recherchenbericht angeführtes Patentdokument | Datum der Veröffentlichung | Mitglied(er) der Patentfamilie | Datum der Veröffentlichung |
|---|---|---|---|
| EP 1357622 A | 29-10-2003 | EP 1357622 A1 | 29-10-2003 |
| | | US 2003091885 A1 | 15-05-2003 |
| | | CN 1459134 T | 26-11-2003 |
| | | WO 02061869 A1 | 08-08-2002 |
| DE 10246459 A1 | 15-04-2004 | WO 2004033079 A2 | 22-04-2004 |
| EP 1391956 A | 25-02-2004 | CA 2444246 A1 | 07-11-2002 |
| | | EP 1391956 A1 | 25-02-2004 |
| | | US 2004137303 A1 | 15-07-2004 |
| | | WO 02089240 A1 | 07-11-2002 |
| EP 1291946 A | 12-03-2003 | CA 2401934 A1 | 11-03-2003 |
| | | CN 1405906 A | 26-03-2003 |
| | | EP 1291946 A2 | 12-03-2003 |
| | | JP 2003163015 A | 06-06-2003 |
| | | US 2003072986 A1 | 17-04-2003 |
| EP 1302996 A | 16-04-2003 | CN 1412875 A | 23-04-2003 |
| | | EP 1302996 A2 | 16-04-2003 |
| | | JP 2003197224 A | 11-07-2003 |
| | | US 2003087142 A1 | 08-05-2003 |

EPO FORM P0461

Für nähere Einzelheiten zu diesem Anhang : siehe Amtsblatt des Europäischen Patentamts, Nr.12/82